# EUROPEAN PATENT APPLICATION

(11) **EP 0 646 822 A2**
(43) Date of publication of application: **05.04.1995**
(21) Application number: 94115605.1
(22) Date of filing: 04.10.1994
(51) Int. Cl.: G02B 17/02, G02B 17/04, G02B 23/02, G02B 26/08, G02B 21/20

(54) **Expandable and tiltable optical system**

(30) Priority: 04.10.1993 JP 278796/93; 01.02.1994 JP 2018/94
(71) Applicant: Matsushima, Hiromi, Tokyo (JP)
(72) Inventor: Matsushima, Hiromi, Tokyo (JP)
(74) Representative: von Kirschbaum, Albrecht, Dipl.-Ing.

(57) **Abstract**

Object: To provide an optical system and optical apparatus which can be expanded and tilted without rotating an image itself.

Constitution: There is a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of U-shape. The first axis and the fifth axis being perpendicular to the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis.

## Description

### BACKGROUND OF THE INVENTION

### FIELD OF THE INVENTION

The present invention relates to an expandable and tiltable optical system and optical apparatus. Products capable of making use of this include telescopes, surveying optical appliances (such as a level, a transit, etc.), astronomical telescopes, binocular telescopes, microscopes, binocular microscopes, periscopes, sights, various projection apparatuses (a projector, a projection machine, etc.), cameras, movie projection machines, broadcasting large television cameras, monitoring cameras, etc., and objective lens barrels, eyepiece lens barrels, photographing lens barrels, projection lens barrels, and the like.

### DESCRIPTION OF THE PRIOR ART

In the past, in the observation of the heavenly bodies near the zenith by, for example, a refracting astronomical telescope, the eyepiece lens barrel is at a lower position and directed downwardly. Therefore, a viewer has to kneel down to direct only his face upward or has to lean over the handrail to lie down. Moreover, since the heavenly bodies to be observed gradually move, the position of the eye portion changes accordingly. The viewer has to follow this to change the attitude of the body as well as his face in particular. For such reasons as described, the viewer is often forced to take an unnatural attitude for a long period of time for the observation of the heavenly bodies. The viewer always feels a great fatigue.

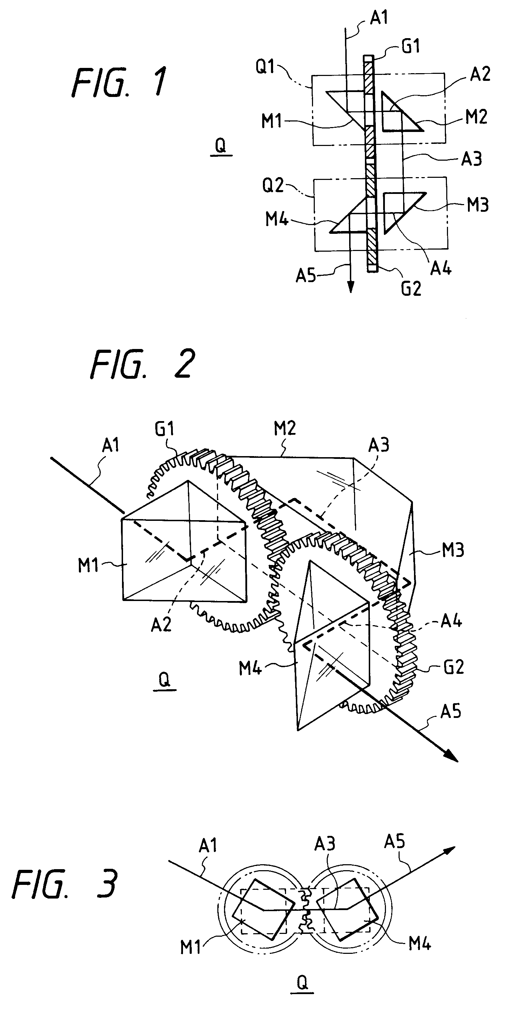

In order to improve such situations as noted above, a diagonal prism unit 1 is inserted into a sleeve at the lower end of a telescope, as shorn in Fig. 1, to thereby bend the direction of a light path at right angles for the observation in an easy attitude. This improves the easiness of the attitude for the viewer to some extent, but still the viewer is often forced to take an unnatural attitude.

Further, there is no difficulties for a person to support the weight of a telescope belonging to a surveying appliance, a fixed type binocular telescope or the like. However, since the height of the telescope is determined depending on a tripod or a mount, it is often that the height of a telescope and the height of eyes of a viewer are not in one straight line. In such cases, the height of a telescope has to lowered to the viewer, or the viewer has to stand on tiptoe or hump up his back to lower his head.

A fixed type telescope shown in Fig. 2 is useful to improve the above-mentioned situation to some extent. These include binocular telescopes for monitoring or sight-seeing, a bird-watching telescope, etc. According to the feature of these telescopes, an eyepiece lens barrel 2 is inclined upwardly to the body of the eyepiece lens barrel 2 and secured thereto. When birds on the trees are observed, this is advantageous because the neck portion is not easily tired. Conversely, when trees or animals are observed from the top of a cliff, for example, or when the state at the lower area is observed from a roof of a high-rise building, it is rather inconvenient for those of this type except a telescope in which an eyepiece portion can rotate around the optical axis of the objective lens, increasing the fatigue of the viewer. Further, in the telescope of this type, the direction of eyes in the eyepiece portion is different from the direction to which the objective portion is directed. Therefore, this has a drawback that a target cannot be promptly introduced into the visual field of the telescope.

When conventional telescopes are used for the purpose of watching such as finding game in a hunting and finding an illegal invader or a poacher, a watcher's head is directed toward an object to be watched so that the watcher is easily noticed by the other party.

The pursuit observation of for example, an aircraft or a bird flying ahead by a conventional fixed type telescope is naturally limited due to the movable range of the telescope with respect to the mount Thus, the viewer often had to take an unnatural attitude. Furthermore, the observation becomes difficult as the object to be observed comes over the viewer's head, and in particular, when the object to be observed passes over his head, it was almost impossible to observe it.

In conventional cameras, it is impossible to peep a finder if no space is available for entry of a viewer' head above or behind the camera, depending on the installation place, rendering the photographing difficult or impossible.

It has been difficult to take a photograph of objects such as persons and animals without being noticed not by remote control but manually using a conventional camera.

It has been difficult for a conventional broadcasting large television camera to continue chasing and arresting of an object in response to the movement thereof which moves at high speed near the camera due to the restriction caused by the construction of a mount and due to the weight of the body. Particularly, the position of a support point is too low despite the great weight of the camera body, and when looking up at a large angle, the camera is held at that angle, and therefore a camera-man had to use a considerable force.

Usually, the adjustment of height of the projection in a conventional projector is carried out by moving up and down a support leg at the bottom of the machine in a manner of fine adjustment, which is however very small in the range. Further, if such a situation should occur in which an object should be projected on the ceiling or the side walls without changing a position of the body for some reasons, when an image is projected using a projector or the like, the construction of a conventional projection lens barrel was impossible to meet such demand.

In conventional astronomical telescopes, watching telescopes or surveying optical appliances, it was impossible to make the range of the observations semispherical without moving the eyepiece portion at all.

### SUMMARY OF THE INVENTION

A principal object of the present invention is to provide an optical system and an optical apparatus in which an incident optical axis portion and an exit optical axis portion are associated to be expanded and tilted in order to overcome various inconveniences caused from the fact that the optical axis cannot be freely expanded and tilted, in conventional optical appliances such as telescopes, microscopes, photographic lenses and projection lenses.

In the past, in optical appliances such as a microscope in which a position as well as a direction of a lens barrel is almost constant, a user has to adjust the height of his own head to the direction of eyes. Therefore, the user often takes an unnatural attitude while being greatly influenced by a habit, a sitting height and a height of a chair, such an attitude often extending over a long period of time. In order to overcome this, it is one of many objects of the present invention to provide a single or binocular optical apparatus capable of expanding and tilting an eye portion with respect to an object.

In a telescope in which the body has to be directed at an object every time a moving object is chased and observed or an object to be observed is changed, it is one of many objects of the present invention to provide an optical apparatus in which an eye portion of an appliance is devised to be expanded and tilted in free directions (up and dawn, left and right, and obliquely) with respect to the body, whereby first, the telescope is expanded so that the optical axis of the eye portion is set onto an extended line of the optical axis of the object to easily arrest a target, and then after the arrest of the target, only the eye portion is bended whereby the user can always make observations for a long period of time in an easy attitude while adjusting to the need of the user.

When a telescope is used for watching such as finding game in a hunting or finding an illegal invader or finding a poacher, it is one of many objects of the present invention to provide an optical apparatus in which an arrangement is made so that an objective portion and an eye portion can be relatively expanded and tilted so that watching can be made without being noticed by the other party at an angle with the direction of the optical axis of the eye portion, namely, the direction of a head of a watcher distanced far away from the direction of a telescope body, namely, the direction of an object to he watched. With this, the watcher can watch the other party even in the attitude with his back turned.

Further it is one of many objects to provide an optical apparatus in which an objective portion (an incident optical axis portion) and an eye portion (an exit optical portion ) which can be relatively expanded and tilted are provided on a fixed type telescope, and the eye portion (an exit optical axis portion) is supported to be turnable at least horizontally whereby a viewer can continue his observation easily without changing his attitude at all when an object pass over his own head.

Furthermore it is one of many objects is to provide an optical apparatus in which an eye portion of a finder is expanded and tilted in free directions (up and down, left and right and obliquely), without changing a position of a camera itself, whereby a viewer can observe an erect image of an object in an easy attitude to easily take a photograph even at a place which has been difficult or impossible for photographing because a finder cannot be peeped in the past.

Moreover it is one of many objects is to provide an optical apparatus in which a photographic lens is constituted by an object side (an incident optical axis portion) and a camera mounting portion (a mount side)(an exit optical axis portion), an it is bended therebetween to thereby take a photograph without being noticed by objects such as persons and animals.

Further, it is one of many objects of the present invention to provide a telescope and a portable microscope which is folded into two sections and thus compact and can make observation in any expanded or tilted state.

Further, in a broadcasting large television camera, it is one of many objects is to provide an optical apparatus in which a photographic lens barrel is expanded and tilted in free directions (up and down, left and right and obliquely) whereby even an object which moves at a high speed can chase and arrest and the vertical photographing can be made easily.

Furthermore, it is one of many objects of the present invention to provide an astronomical telescope, a watching telescope, and a surveying optical apparatus in which the range of observations can make semispherical surface above the head.

Further, it is one of many objects to provide a photographic optical apparatus which can make the range of photographing semispherical surface without moving a camera at all.

Further, in a projector or the like, it is one of many objects to provide an optical apparatus in which a projection lens barrel is expanded and tilted in free directions (up and down, left and right and obliquely) whereby an erect image can be projected in a direction nearly occupying the semispherical surface or more ahead without moving the body.

Various other objects other than those described above of the present invention are obvious from the ensuing description and accompanying drawings.

For achieving the above-described various objects, the present invention provides an optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 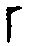 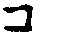 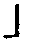 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis.

### (Basic type + rotational support)

For achieving the above-described various objects, the present invention provides an optical system comprising a series of light paths including at least five optical axes from a first optical axis to a fifth optical axis constituting center axes thereof, the second axis and the fourth his being parallel with each other, one ends on the same side thereof being perpendicular to both ends of the third optical axis, as a result of which the second axis, the third axis and the fourth axis are arranged in the same plane in the form of 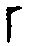 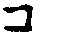 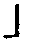 shape, one ends of the first axis and the fifth axis being perpendicular to the other ends of the second optical axis and the fourth optical axis, the first optical axis and the fifth optical axis being associated to be rotatable in symmetrical synchronism with each other about the second optical axis and the fourth optical axis, further the whole body being supported rotatably about at least one of said first optical axis and said fifth optical axis.

### (Basic type + lenses)

For achieving the above-described various objects, the present invention provides an optical system comprising a series of light paths successively formed via reflecting members, said light paths including at least five optical axes from a first optical axis to a fifth optical axis constituting center was thereof, the second axis and the fourth his being parallel with each other, one ends on the same side thereof being perpendicular to both ends of the third optical axis, as a result of which the second axis, the third axis and the fourth axis are arranged in the same plane in the form of 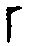 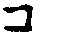 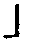 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths.

### (Basic type + rotational support + lenses)

a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the
second axis, the third axis and the fourth axis are arranged in the same plane in the form of 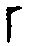 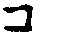 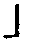 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis, further the whole body being supported rotatably about at least one of said first optical axis and said fifth optical axis, and lenses being provided where necessary in the light paths.

### (Basic type + subsequent erect optical system + lenses)

For achieving the above-described various objects, the present invention provides an optical system comprising a combination of a tiltable optical system and an erect optical system subsequent to said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 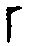 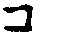 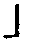 shape, one ends of the first axis and the fifth axis being perpendicular to the other ends of the second optical axis and the fourth optical axis, the first optical axis and the fifth optical axis extending in the opposite directions at a basic position at a basic position when the axes from the first optical axis to the fifth optical axis are placed in the same, plane, and the first optical axis and the fifth optical axis being associated to be rotatable in symmetrical synchronism with each other about the second optical axis and the fourth optical axis, further lenses being provided where necessary in the light paths in the whole combination.

### (Basic type + subsequent erect optical system + lenses + rotational support)

For achieving the above-described various objects, the present invention provides an optical system comprising a combination of a tiltable optical system and an erect optical system subsequent to said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 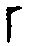 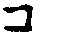 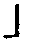 shape, one ends of the first axis and the fifth axis being perpendicular to the other ends of the second optical axis and the fourth optical axis, the first optical axis and the fifth optical axis extending in the opposite directions at a basic position when all the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination, and the whole body being supported rotatably about at least either said first optical axis or an exit optical axis of said erect optical system.

### (Basic type + subsequent erect optical system + lenses + same straight line)

For achieving the above-described various objects, the present invention provides an optical system comprising a combination of a tiltable optical system and an erect optical system subsequent to said tiltable optical system, said tiltable optical system comprising a series of light paths successively formed via reflecting members, said light paths including at least five optical axes from a first optical axis to a fifth optical axis constituting center axes thereof, the second axis and the fourth optical his being parallel with each other, one ends on the same side thereof being perpendicular to both ends of the third optical axis, as a result of which the second axes, the third axis and the fourth axis are arranged in the same plane in the form of 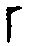 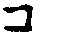 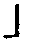 shape, one ends of the first axis and the fifth axis being perpendicular to the other ends of the second optical axis and the fourth optical axis, the first optical axis and the fifth optical axis extending in the opposite directions at a basic position when all the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination, and at the basic position, the first optical axis and an exit optical axis of the erect optical system being on the same straight line.

### (Basic type + subsequent erect optical system + lenses + same straight line + rotational support)

For achieving the above-described various objects, the present invention provides an optical system comprising a combination of a tiltable optical system and an erect optical system subsequent to said tiltable optical system, said tiltable optical systems comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth his are arranged in the same plane in the form of 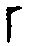 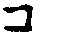 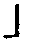 shape, one ends of the first axis and the fifth axis being perpendicular to the other ends of the second optical axis and the fourth optical axis, the first optical axis and the fifth optical axis extending in the opposite directions at a basic position when all the axes from the first optical axis to the fifth optical axis are placed in the same plane, and the first optical axis and the fifth optical axis being associated to he rotatable in symmetrical synchronism with each other about the second optical axis and the fourth optical axis, further lenses being provided where necessary in the light paths in the whole combination, at the basic position the first optical axis and an exit optical axis of the erect optical system being on the same straight line, and the whole body being supported rotatably about at least either said first optical axis or said exit optical axis of said erect optical system.

### (Basic type + preceding erect optical system + lenses)

combination of a tiltable optical system and an erect optical system preceding said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 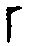 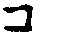 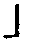 shape, one ends of the first axis and the fifth axis being perpendicular to the other ends of the second optical axis and the fourth optical axis, the first optical axis and the fifth optical axis standing in the opposite directions at a basic position when the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination.

### (Basic type + preceding erect optical system + lenses + rotational support)

For achieving the above described various objects, the present invention provides an optical system comprising a combination of a tiltable optical system and an erect optical system preceding said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 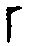 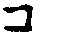 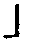 shape, one ends of the first axis and the fifth axis being perpendicular to the other ends of the second optical axis and the fourth optical axis, the first optical axis and the fifth optical axis extending in the opposite directions at a position when the axes from the first optical axis to the fifth optical axis are placed in the same plane, and the first optical, axis and the fifth optical axis being associated to be rotatable in symmetrical synchronism with each other about the second optical axis and the fourth optical axis, further lenses being provided where necessary in the light paths in the whole combination, and the whole body being supported rotatably about at least either an incident optical axis of said erect optical system and said fifth optical system.

### (Basic type + preceding erect optical system + lenses + same straight line)

For achieving the above described various objects, the present invention provides an optical system comprising a combination of a tiltable optical system and an erect optical system preceding said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and fourth axis are arranged in the same plane in the form of 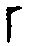 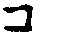 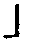 shape, one ends of the first axis and the fifth axis being perpendicular to the other ends of the second optical axis and the fourth optical axis, the first optical axis and the fifth optical axis extending in the opposite directions at a position when all the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination, and at the basic position, an incident optical axis of the erect optical system and the fifth optical axis being on the same straight line.

### (Basic type + preceding erect optical system + lenses + same straight line + rotational support)

For achieving the above-described various objects, the present invention provides an optical system comprising a combination of a tiltable optical system and an erect optical system preceding said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 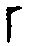 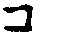 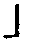 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided at a basic position where necessary in the light paths in the whole combination, at the basic position an incident optical axis of the erect optical system and the fifth optical axis being on the same straight line, and the whole body being supported rotatably about at least either an incident optical axis of said erect optical system and said fifth optical axis.

### (Two sets of basic types rotatably combined)

For achieving the above-described various objects, the present invention provides an optical system comprising a set of optical systems each comprising a series of light paths successively formed via reflecting members, said light paths including at least five optical axes from a first optical axis to a fifth optical axis constituting center axes, thereof, the second axis and the fourth axis being parallel with each other, one ends on the same side thereof being perpendicular to both ends of the third optical axis, as a result of which the second axis, the third axis and the fourth axis are arranged in the same plane in the form of 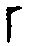 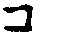 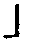 shape, one ends of the first axis and the fifth axis being perpendicular to the other ends of the second optical axis and the fourth optical axis, the first optical axis
and the fifth optical axis extending in the opposite directions when all the axes from the first optical axis to the fifth optical axis are placed in the same plane, and the first optical axis and the fifth optical axis being associated to he rotatable in symmetrical synchronism with each other about the second optical axis and the fourth optical axis; and a further set of optical systems configured similarly to the first mentioned set of optical systems, either the fifth optical axis and the other first optical axis being connected in series to be rotatable each other.

### (Two sets of basic types combined with planes perpendicularly intersected each other)

For achieving the above-described various objects, the present invention provides an optical system comprising a set of optical systems each comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 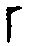 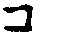 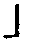 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis; and a further set of optical systems configured similarly to the first-mentioned set of optical systems, either fifth optical axis and the other first optical system being connected in series so that two sets of said planes including the first optical axis to the fifth optical axes belonging to the respective optical systems perpendicularly intersect.

### (Two sets of basic types rotatably combined + lenses)

For achieving the above-described various objects, the present invention provides an optical system comprising a set of optical systems each comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 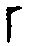 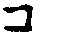 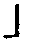 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis; and a further set of optical systems configured similarly to the first-mentioned set of optical systems, either the fifth optical axis and the other first optical axis being connected in series to be rotatable each other, and lenses being provided where necessary in the whole light path.

### (Two gets of basic types with planes perpendicularly intersected each other + lenses)

For achieving the above-described various objects, the present invention provides an optical system comprising a set of optical systems each comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 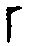 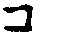 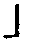 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis; and a further set of optical systems configured similarly to the first-mentioned set of optical systems, either fifth optical axis and the other first optical axis being connected in column so that two sets of planes including the first optical axis to the fifth optical axis belonging to the respective optical systems perpendicularly intersecting each other, and lenses being provided where necessary in the whole light path.

### (Basic type) (hereinafter, apparatuses)

For achieving the above-described various objects, the present invention provides an optical apparatus comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 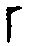 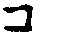 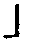 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis.

### (Basic type + rotational support)

For achieving the above-described various objects, the present invention provides an optical apparatus comprising a series of light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axes and the fourth axis are arranged in the same plane in the form of 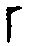 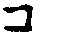 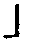 shape, one ends of the first axis and the fifth axis being perpendicular to the other ends of the second optical axis and the fourth optical axis, the first optical axis and the fifth optical axis, being associated to be rotatable in symmetrical synchronism with each other about the second optical axis and the fourth optical axis, further the whole body being supported rotatably about at least one of said first optical axis and said fifth optical axis.

### (Basic type + lenses)

For achieving the above-described various objects, the present invention provides an optical apparatus comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 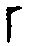 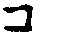 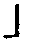 shape, one ends of the first axis and the fifth axis being perpendicular to the other ends of the second optical axis and the fourth optical axis, the first optical axis and the fifth optical axis extending in the opposite directions at a basic when the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths.

### (Basic type + rotational support + lenses)

For achieving the above-described various objects, the present invention provides an optical apparatus comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 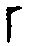 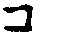 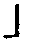 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis, further the whole body being supported rotatably about at least one of said first optical axis and said fifth optical axis and lenses being provided where necessary in the light paths.

### (Basic type + subsequent erect optical apparatus + lenses)

For achieving the above-described various objects, the present invention provides an optical apparatus comprising a combination of a tiltable optical system and an erect optical system subsequent to said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 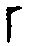 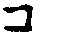 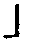 shape, one ends of the first axis and the fifth axis being perpendicular to the other ends of the second optical axis and the fourth optical axis, the first optical axis and the fifth optical axis extending in the opposite directions at a basic position at a basic position when the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination.

### (Basic type + subsequent erect optical apparatus + lenses + rotational support)

For achieving the above-described various objects, the present invention provides an optical apparatus comprising a combination of a tiltable optical apparatus and an erect optical apparatus subsequent to said tiltable optical apparatus, said tiltable optical apparatus comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 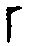 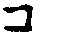 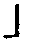 shape, one ends of the first axis and the fifth axis being perpendicular to the other ends of the second optical axis and the fourth optical axis, the first optical axis and the fifth optical axis extending in the opposite directions at a basic position when all the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination, and the whole body being supported rotatably about at least either said first optical axis or an exit optical axis of said erect optical apparatus.

### (Basic type + subsequent erect optical apparatus + lenses + one straight line)

For achieving the above-described various objects, the present invention provides an optical apparatus comprising a combination of a tiltable optical apparatus and an erect optical apparatus subsequent to said tiltable optical apparatus, said tiltable optical apparatus comprising a series of light paths successively formed via reflecting members, said light paths including at least five optical axes from a first optical axis to a fifth optical axis constituting center axes thereof, the second axis and the fourth optical axis being parallel with each other, one ends on the same side thereof being perpendicular to both ends of the third optical axis, as a result of which the second axis, the third axis and the fourth axis are arranged in the same plane in the form of 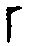 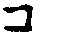 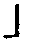 shape, one ends of the first axis and the fifth axis being perpendicular to the other ends of the second optical axis and the fourth optical axis, the first optical axis and the fifth optical axis extending in the opposite directions at a basic position when all the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination, and at the basic position, the first optical axis and an exit optical axis of the erect optical system being on the same straight line.

### (Basic type + subsequent erect optical apparatus + lenses + one straight line + rotational support)

For achieving the above-described various objects, the present invention provides an optical apparatus comprising a combination of a tiltable optical apparatus and an erect optical apparatus subsequent to said tiltable optical apparatus, said tiltable optical apparatus comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 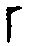 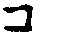 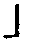 shape, one ends of the first axis and the fifth axis being perpendicular to the other ends of the second optical axis and the fourth optical axis, the first optical axis and the fifth optical axis extending in the opposite directions at a basic position when all the axes from the first optical axis to the fifth optical axis are placed in the same plane, and the first optical axis and the fifth optical axis being' associated to be rotatable in symmetrical synchronism with each other about the second optical axis and the fourth optical axis, further lenses being provided where necessary in the light paths in the whole combination, at the basic position the first optical axis and an exit optical axis of the erect optical system being on the same straight line, and the whole body being supported rotatably about at least either said first optical axis or an exist optical axis of said erect optical system.

### (Basic type + preceding erect optical apparatus + lenses)

For achieving the above-described various objects, the present invention provides an optical apparatus comprising a combination of a tiltable optical system and an erect optical system preceding said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 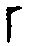 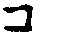 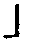 shape, one ends of the first axis and the fifth axis being perpendicular to the other ends of the second optical axis and the fourth optical axis, the first optical axis and the fifth optical axis extending in the opposite directions at a basic position when the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination.

### (Basic type + preceding erect optical apparatus + lenses + rotational support)

For achieving the above-described various objects, the present invention provides an optical apparatus comprising a combination of a tiltable optical system and an erect optical system preceding said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 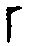 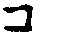 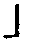 shape, one ends of the first axis and the fifth axis being perpendicular to the other ends of the second optical axis and the fourth optical axis, the first optical axis and the fifth optical axis extending in the opposite directions at a position when the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided whore necessary in the light paths in the whole combination, and the whole body being supported rotatably about at least either an incident optical axis of said erect optical system and said fifth optical apparatus.

### (Basic type + preceding erect optical apparatus + lenses + one straight line)

For achieving the above-described various objects, the present invention provides an optical apparatus comprising a combination of a tiltable optical system and an erect optical system preceding said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and fourth axis are arranged in the same plane in the form of 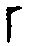 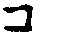 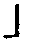 shape, one ends of the first axis and the fifth axis being perpendicular to the other ends of the second optical axis and the fourth optical axis, the first optical axis and the fifth optical axis extending in the opposite directions at a position when all the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination, and at the basic position, an incident optical axis of the erect optical system and the fifth optical axis being on the same straight line.

### (Basic type + preceding erect optical apparatus + one straight + rotational support)

For achieving the above-described various objects, the present invention provides an optical apparatus comprising a combination of a tiltable optical apparatus and an erect optical apparatus preceding said tiltable optical apparatus, said tiltable optical apparatus comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 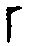 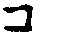 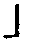 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided at a basic position where necessary in the light paths in the whole combination, at the basic position an incident optical axis of the erect optical system and the fifth optical axis being on the same straight line, and the whole body being supported rotatably about at least either an incident optical axis of said erect optical system and said fifth optical axis.

### (Two sets of basic types rotatably combined)

For achieving the above-described various objects, the present invention provides an optical apparatus comprising a a set of optical apparatuses each comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 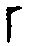 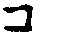 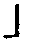 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis; and a further set of optical apparatuses configured similarly to the first mentioned set of optical apparatuses, either the fifth optical axis and the other first optical axis being connected in series to be rotatable each other.

### (Two sets of basic types with planes perpendicularly intersected each other)

For achieving the above-described various objects, the present invention provides an optical apparatus comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 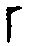 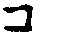 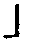 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis; and a further set of optical apparatuses configured similarly to the first-mentioned set of optical apparatuses, either fifth optical axis and the other first optical apparatus being connected in series so that two sets of said planes including the first optical axis to the fifth optical axis belonging to the respective optical apparatuses perpendicularly intersect.

### (Two sets of basic types rotatably combined + lenses)

For achieving the above-described various objects, the present invention provides an optical apparatus comprising a set of optical apparatuses each comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 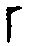 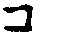 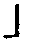 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis; and a further set of optical apparatuses configured similarly to the first-mentioned set of optical apparatuses, either the fifth optical axis and the other first optical axis being connected in series to be rotatable each other, and lenses being provided where necessary in the whole light path.

### (Two sets of basic types combined with planes perpendicularly intersected each other + lenses)

For achieving the above-described various objects, the present invention provides an optical apparatus comprising a set of optical systems each comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 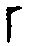 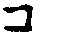 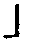 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to-be rotatable in symmetrical synchronism with each other about the second optical axis and the fourth optical axis; and a further set of optical apparatuses configured similarly to the first-mentioned set of optical apparatuses, either fifth optical axis and the other first optical axis being connected in column so that two sets of planes including the first optical axis to the fifth optical axis belonging to the respective optical apparatuses perpendicularly intersecting each other, and lenses being provided where necessary in the whole light path.

### (Binocular optical apparatus)

For achieving the above-described various objects, the present invention provides a binocular optical apparatus comprising a set of optical apparatuses each having a series of light paths successively formed via at least reflecting members, said light paths including at least nine optical axes from a first optical axis to a ninth optical axis constituting center axes thereof, the first optical axis constituting an incident optical axis of the whole optical apparatus, the second optical axis and the fourth optical axis being parallel with each other, one ends on the same side thereof being perpendicular to both ends of the third optical axis, as a result of which the second axis, the third axis and the fourth axis are arranged in the same plane in the form of 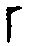 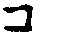 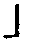 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis, the fifth optical axis to the ninth optical axis being via an erect optical apparatus, the ninth optical axis being an exit optical axis of the whole optical apparatus, being parallel with the fifth optical axis and being supported rotatably about the fifth optical axis together with the sixth, seventh and eighth optical axes; and a further set of optical apparatuses configured symmetrically with the first mentioned optical apparatus; the sixth optical axis to the ninth optical axis being associated to be rotatable in symmetrically synchronism with each other about the respective fifth optical axis.

### (Binocular optical apparatus)

For achieving the above-described various objects, the present invention provides a binocular optical apparatus comprising a set of optical apparatuses each having a series of light paths successively formed via at least reflecting members, said light paths including at least seven optical axes from a first optical axis to the seventh optical axis constituting center axes thereof, the first optical axis constituting an incident optical axis of the whole optical apparatus, the second optical axis and the fourth optical axis being parallel with each other, one ends on the same side thereof being perpendicular to both ends of the third optical axis, as a result of which the second axis, the third axis and the fourth axis are arranged in the same plane in the form of 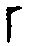 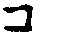 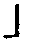 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis, an erect optical apparatus being inserted between the first optical axis an the fifth optical axis, the fifth optical axis being formed into the sixth optical axis via the reflecting member, the sixth optical axis being formed into the seventh optical axis, the seventh optical axis being an exit optical axis of the whole optical apparatus, being parallel with the fifth optical axis and being supported to be rotatable about the fifth optical axis together with the sixth optical axis; an a further set of optical apparatuses configured symmetrically with the first mentioned optical apparatus; the sixth optical axis to the seventh optical axis being associated to be rotatable in symmetrically synchronism with each other about the respective fifth optical axis.

For achieving the above-described various objects, the present invention provides an optical apparatus wherein the symmetrical synchronous rotation of the first optical axis and the fifth optical axis is effected by at least a pair of gears meshed with each other, such rotation being effected about the second optical axis and the fourth optical axis.

For achieving the above-described various objects, the present invention provides a binocular optical apparatus wherein the symmetrical synchronous rotation of the first optical axis and the fifth optical axis is effected by at least a pair of gears meshed with each other, such rotation being effected about the second optical axis and the fourth optical axis.

For achieving the above-described various objects, the present invention provides an optical apparatus wherein the symmetrical synchronous rotation of the first optical axis and the fifth optical axis is effected by two worm wheels and worms interposed therebetween and meshed therewith, such rotation being effected about the second optical axis and the fourth optical axis.

For achieving the above-described various objects, the present invention provides a binocular optical apparatus wherein the symmetrical synchronous rotation of the first optical axis and the fifth optical axis is effected by two worm wheels and worms interposed therebetween and meshed therewith, such rotation being effected about the second optical axis and the fourth optical axis.

For achieving the above-described various objects, the present invention provides an optical apparatus wherein the symmetrical synchronous rotation of the first optical axis and the fifth optical axis is effected by two lens barrels and a wire-like or web-like part extended in the form of ∞ therebetween, such rotation being effected about the second optical axis and the fourth optical axis.

For achieving the above-described various objects, the present invention provides a binocular optical apparatus wherein the symmetrical synchronous rotation of the first optical axis and the fifth optical axis is effected by two lens barrels and a wire-like or web-like part extended in the form of ∞ therebetween, such rotation being effected about the second optical axis and the fourth optical axis.

For achieving the above-described various objects, the present invention provides an optical apparatus wherein the symmetrical synchronous rotation of the first optical axis and the fifth optical axis is effected by two synchronous motors, ouch rotation being effected about the second optical axis and the fourth optical axis.

For achieving the above-described various objects, the present invention provides a binocular optical apparatus wherein the symmetrical synchronous rotation of the first optical axis and the fifth optical axis is effected by two synchronous motors, such rotation being effected about the second optical axis and the fourth optical axis.

For achieving the above-described various objects, the present invention provides an optical apparatus comprising a click stop device for detachably fixing the relative positional relationship between the first optical axis and the fifth optical axis.

For achieving the above-described various objects, the present invention provides a binocular optical apparatus comprising a click stop device for detachably fixing the relative positional relationship between the first optical axis and the fifth optical axis.

For achieving the above-described various objects, the present invention provides an optical apparatus utilizing one of said pair of gears as a click stop device for detachably fixing the relative positional relationship between the first optical axis and the fifth optical axis.

For achieving the above-described various objects, the present invention provides a binocular optical apparatus utilizing one of said pair of gears as a click stop device for detachably fixing the relative positional relationship between the first and the fifth optical axis.

For achieving the above-described various objects, the present invention provides an optical apparatus comprising a balancer for gently keeping the relative positional relationship between the first optical axis and the fifth optical axis.

For achieving the above-described various objects, the present invention provides a binocular optical apparatus comprising a balancer for gently keeping the relative positional relationship between the first optical axis and the fifth optical axis.

For achieving the above-described various objects, the present invention provides an optical apparatus wherein the relative positional relationship between the first optical axis and the fifth optical axis is kept by an adjustable frictional force.

For achieving the above-described various objects, the present invention provides a binocular optical apparatus wherein the relative positional relationship between the first optical axis and the fifth optical axis is kept by an adjustable frictional force.

### BRIEF DESCRIPTION OF THE DRAWINGS

Fig. 1 is a side view of a part in which the zenith prism is mounted on the eye portion of a conventional astronomical telescope.

Fig. 2 is a side view showing one example of a conventional fixed type telescope.

Fig. 3 is a light path view of assistance in explaining the principle of the optical system according to the present invention.

Fig. 4 is a schematic bird's-eye view showing one example of a basic construction at a basic position of the optical system according to the present invention.

Fig. 5 is a schematic view showing the construction between a first optical axis and a fifth optical axis in the optical system according to the present invention.

Fig. 6 is a bird's-eye view of a front-half portion of the light path shown in Fig. 7 of assistance in explaining the principle of the optical system according to the present invention.

Fig. 7 is a birds-eye view showing the motion of the front-half portion of the light path shown in Fig. 3 of assistance in explaining the optical system according to the present invention.

Fig. 8 is a bird's-eye view showing the motion of a rear half portion of the light path shown in Fig. 3 of assistance in explaining the optical system according to the present invention.

Fig. 9 is a schematic view showing the geometrical relationship between optical axes in the optical system according to the present invention.

Fig.10 is a schematic view showing the geometric relationship between optical axes in the optical system according to the present invention.

Fig. 11 is a schematic view showing the geometrical relationship between optical axes in the optical system according to the present invention.

Fig. 12 is a longitudinal sectional view of one embodiment according to the optical system of the present invention.

Fig. 13 is a left side view of the embodiment shown in Fig. 12.

Fig. 14 is a bird's-eye view in case where the embodiment shown in Fig. 12 is utilized as an eye portion of a telescope.

Fig. 15 is a bird's-eye view of the type in which the embodiment shown in Fig. 12 is reinforced.

Fig. 16 is an external view showing another example of a telescope making use of the optical system according to the present invention.

Fig. 17 Is an external view in case where the entirety of another embodiment of the optical system according to the present invention is folded.

Fig. 18 is an external view showing another example of a telescope making use of the optical system according to the present invention.

Fig. 19 is a sectional View of a click stop device that can be used for the optical apparatus according to the present invention.

Fig. 20 is a sectional view of a further click stop device that can be used for the optical apparatus according to the present invention.

Fig. 21 is a longitudinal sectional view showing one example of a manipulator in the optical system according to the present invention.

Fig. 22 is an external view of a large television camera in which the optical system of the present invention is applied to a photographic lens barrel.

Fig. 23 is an external view of a slide projector in which the optical system of the present invention is applied to a projection lens barrel.

Fig. 24 is a sectional view showing one example of an inching device in the optical system according to the present invention.

Fig. 25 is a light path view at a basic position of assistance in explaining the principle of a ground telescope which is one embodiment of the present invention.

Fig. 26 is a bird's-eye view at a basic position of assistance in explaining the principle of a ground telescope which is the embodiment shown In Fig. 25.

Fig. 27 is a light path view at a basic position with the arrangement of parts slightly changed in the embodiment of Fig. 27.

Fig. 28 is a light path view at a basic position of assistance of explaining a ground telescope different from that of the embodiment of Fig. 25

Fig. 29 is a schematic bird's-eye view at a basic position of assistance in explaining the principle of the ground telescope shown in Fig. 28.

Fig. 30 is a light path view at a basic position with the arrangement of parts slightly changed in the embodiment of Fig. 28.

Fig. 31 is a sectional view of main parts of a binocular telescope which is one embodiment of the present invention.

Fig. 32 is a bottom view of the embodiment shown in Fig. 31.

Fig. 33 is a modified example of an eye portion represented partly in section in the embodiment shown in Fig. 31.

Fig. 34 is a conceptual bird's-eye view showing the relationship between all optical axes in an embodiment in which two sets of the optical systems according to the present invention are connected in series.

### DETAILED DESCRIPTION OF THE PREFERRED EMBODIMENTS

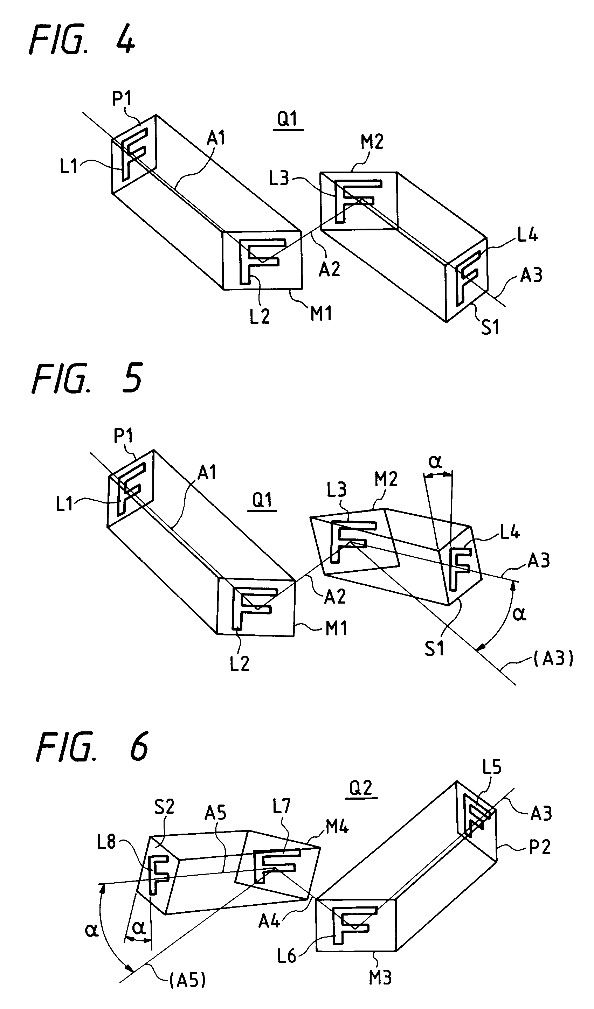

In the above-described structures, common basic portions are briefly shown in Figs. 3 and 4. Q represents the entire expand-and contractible optical system. A1, A2, A3, A4 and A5 designate a first optical axis, a second optical axis, a third optical axis, a fourth optical axis and a fifth optical axis, respectively. At the basic position, the first optical axis and the fifth optical axis are in the same plane as that constituted by the optical axis A2 and the optical axis A3. All the angles formed by two optical axes adjacent to each other are the right angles. The first optical axis A1 and the fifth optical axis A5 extends in the opposite directions. While reflecting members M1, M2, M3 and M4 shown make use of rectangular prisms, it is to be noted that they may be plane mirrors. Further, a part of whole of the reflecting members may be replaced by other prisms when necessary depending on uses. The reflecting members M1 and M4 can be symmetrically rotated in the opposite directions by a pair of gears G1 and G2 having the same diameter which are meshed with each other.

Practically speaking, it is advantageous in terms of processing, assembly, disassembly, inspection, accuracy retention, etc. that two prisms directly related to the third optical axis A3 he constituted by a single prism as shown in Fig. 4 except that a lens or the like need be inserted therebetween.

Further, the reflecting members M1 and M2 are carried so that they can be symmetrically rotated about the second optical axis A2 and the fourth optical axis A4, respectively, by the pair of gears, as previously mentioned. Accordingly, the first optical axis and the fifth optical axis are present either in the above-mentioned same plane as shown in Figs. 3 and 4 or in a space divided into two sections by the plane constituted by the aforementioned optical axes A2, A3 and A4 as shown in Fig. 5.

Fig. 6 is a schematic bird's-eye view of an optical system portion Q1 surrounded by the chain lines of Fig. 3. It is here assumed that the first optical axis A1, the second optical axis A2, and the third optical axis A3 are present in the same plane. Assume now that an imaginary image plane P1 perpendicular to the first optical axis A1 is present and parallel rays emerge along the first optical axis A1 from the respective points of a letter image L1 on the imaginary image plane P1. An image projected on a reflecting surface M1 has √2 times in lateral width alone as in L2, and is projected as an image L3 on a right reflecting surface M2 as it is. Further, parallel rays from the projected image L3 moves forward along the third optical axis A3 and is projected as an image L4 having the same size as the first image on an imaginary screen S1 provided perpendicularly to the third optical axis A3.

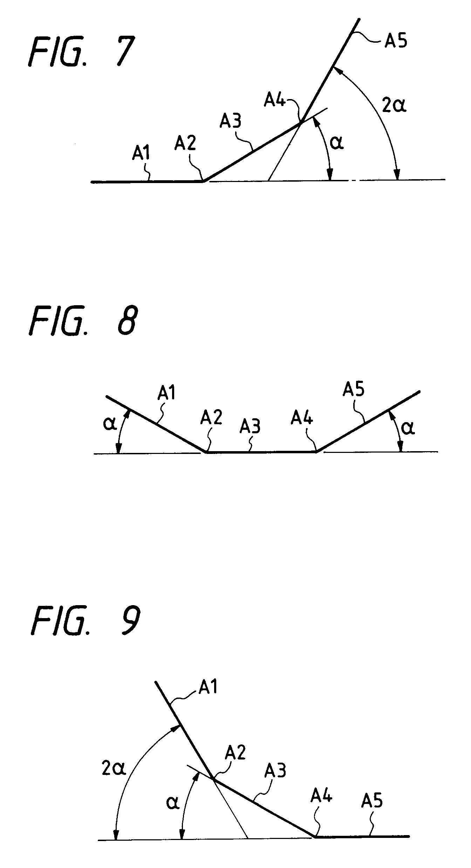

Fig. 7 shows a case where the third optical axis A3 is rotated (tilted) upwardly by an angle α about the second optical axis A2 from the state shown in Fig. 6. It is understood at this time that the letter image L4 projected on the imaginary screen S1 is rotated (tilted) clockwise by an angle α. (A) shows an original position of the third optical axis A3.

It will be understood from the aforementioned fact that even if only two reflecting surfaces are used for an objective part and an eye part to try to change the direction of the objective part and the eye part, the image becomes also rotated (tilted) as being bended.

Fig. 8 is a schematic bird's-eye view of an optical system portion Q2 surrounded by the chain lines of Fig. 3. Fig. 3 shows the state where the third optical axis A3, the fourth optical axis A4 and the fifth optical axis A5 are present in the same plane but Fig. 8 shows the state where the fifth optical axis A5 is rotated (tilted) upwardly by α about the fourth optical axis A4 from the first-mentioned state. (A) shows an original position of the fifth optical axis.

Also in this figure, it is assumed that the imaginary image plane P2 per perpendicular to the third optical axis A3 is present. Supposing that parallel rays emerge along the third optical axis A3 from the respective points of a letter image L5 on the imaginary image plane P2, an image projected on the reflecting surface M3 is L6, from which it moves forward along the fourth optical axis A4 and is projected as an image L7 on the left reflecting surface M4. The light from the projected image L7 further moves forward along the fifth optical axis A4 and is projected as an image L8 on an imaginary screen S2 provided perpendicularly to the fifth optical his A5. (A5) shows an original position of the fifth optical axis A5.

As previously mentioned, it is understood that since the fifth optical axis A5 is rotated (tilted) by an angle α, which is the same angle as that as mentioned above, upwardly about the fourth optical axis A4, the letter image L8 projected on the imaginary screen S2 provided perpendicularly to the fifth optical axis A5.

If the imaginary screen S1 on which the letter image L4 tilted clockwise by the angle α of Fig. 7 is projected is placed at a position of the imaginary image plane P2 of Fig. 8, the letter image L8 to be projected on the imaginary screen S2 rotates counterclockwise by an angle α and therefore takes a form of an erect image.

Accordingly, it will be understood that even if the light from the first letter image L1 passes the two optical system portions Q1 and Q2, the erect image can be obtained as far as the position between the respective optical axes is in the relation as shown in Fig. 9. In Fig. 9, it is to be noted that the second optical axis A2 and the fourth optical axis A4 are placed vertically to a paper surface.

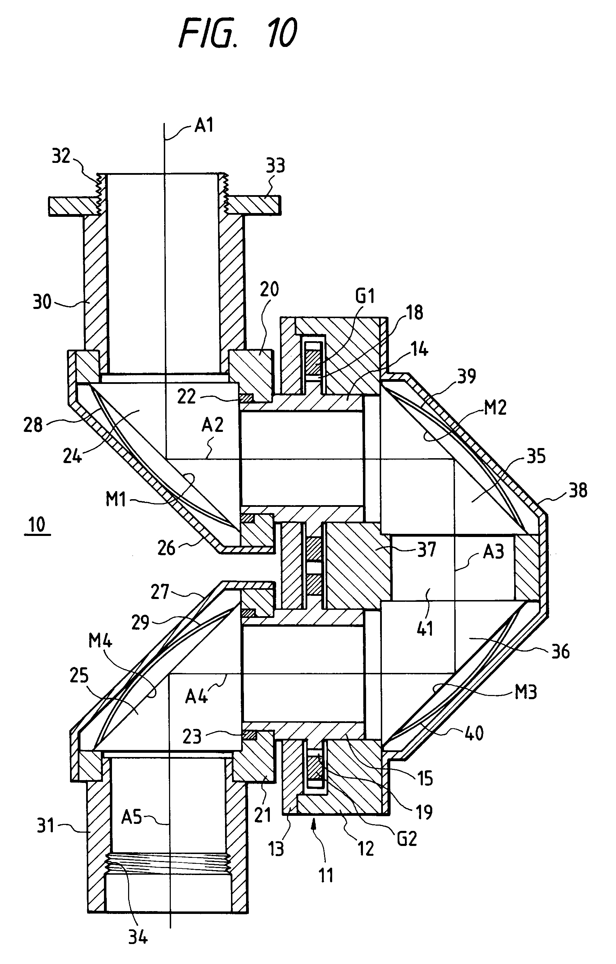

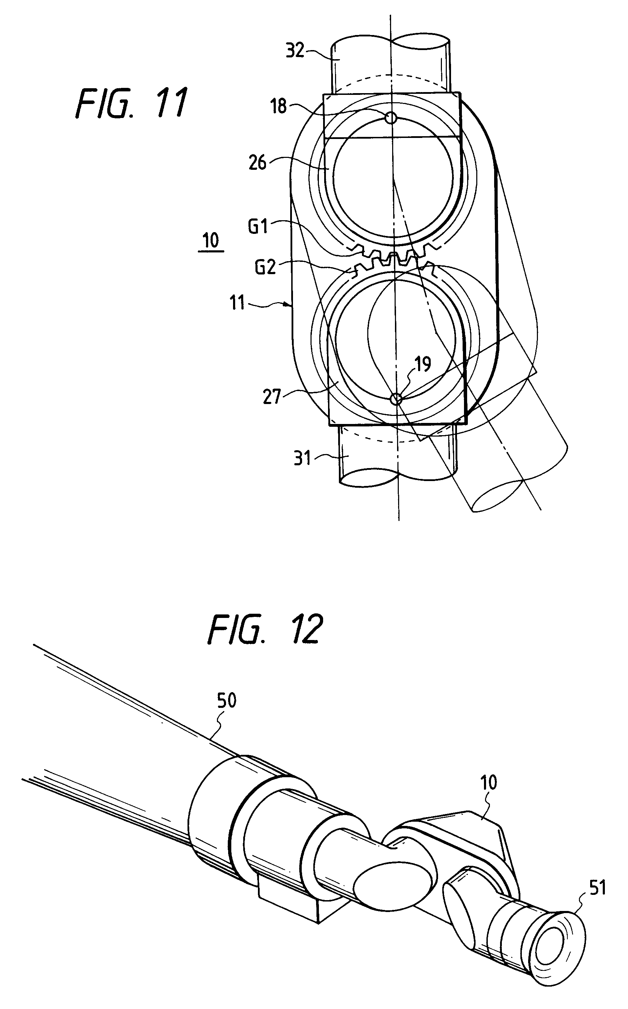

The relationships between the first optical axis A1, the fifth optical axis A5 and the third optical axis A3 are relative and therefore, the state of Fig.10 as well as that of Fig.11 is equivalent to that of Fig. 9. Also in Figs. 10 and 11, the second optical axis A2 and the fourth optical axis A4 are placed vertically to a paper surface.

To maintain the symmetrical positional relationship between the first optical axis A1 and the fifth optical axis A5 with the third optical axis sandwiched therebetween, as shown in Figs. 9 to 11, it is suffice that a pair of gears having the same number of teeth which are meshed with each other so as to he rotated in the opposite directions about the respective second optical axis A2 and the fourth optical axis A4 are provided and the first optical axis A1 and the fifth optical his A5 are rotated by the respective gears. However, if the distance between both the gears is excessively large, use may be made of a gear train composed of the even number of gears in order to prevent an increase in a diameter of the gears.

In place of the gears, wires or metal tapes, or tough plastic tapes are tightly wound and mounted, in the form of ∞ ('tasuki' like), on the outer peripheries of two lens-barrels about the second optical axis A2 and the fourth optical axis A4 whereby both the lens-barrels can be symmetrically rotated.

The above configuration employs a purely mechanical interlocking method. On the other hand, control motors are independently mounted on the aforesaid two lens-barrels, respectively, and electric signals are fed thereto in a one-dimensional manner whereby the first optical axis A1 and the fifth optical axis A5 can be symmetrically rotated, which is an electrical interlocking method.

A specific embodiment according to the present invention is shown in Figs. 12 to 15. In this embodiment, a single optical unit 10 itself can he connected to other optical appliances.

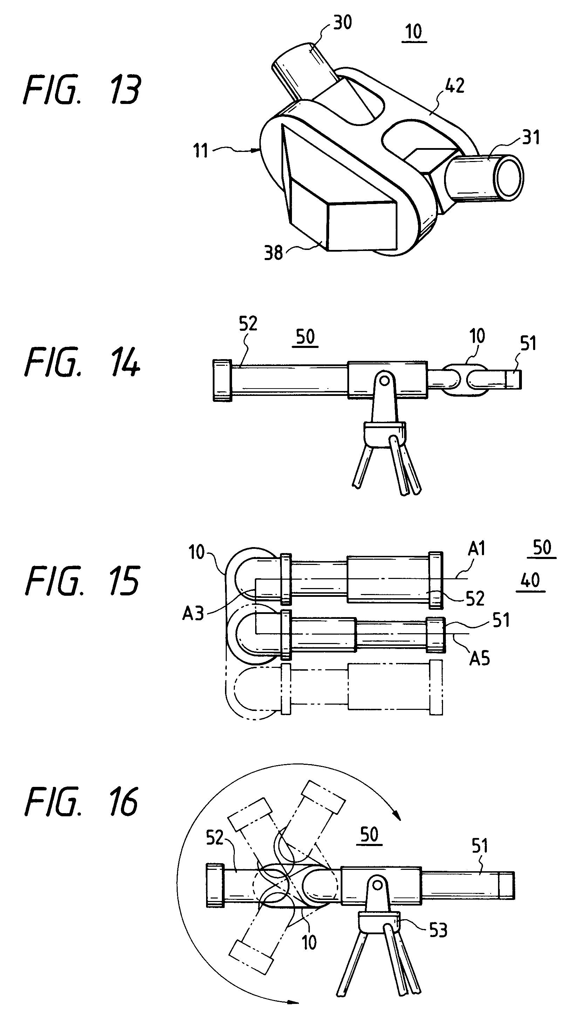

Fig. 12 is a longitudinal sectional view, and Fig. 13 is a left side view of Fig. 12 with a part thereof removed.

In one embodiment 10 of the optical apparatus according to the present invention shown in Fig. 12, a pair of lens-barrels 14 and 15 each composed of a hollow shaft and capable of receiving a lens or the like when necessary are supported, within a gear box 11 composed of two parts 12 and 13 fitted to each other, so that they can be rotated about a second optical axis A2 and a fourth optical axis A4, respectively, and a pair of ring gears G1 and G2 having the same number of teeth meshed with each other are fixed by means of pins 18 and 19, respectively, around both the lens-barrels. It is to be noted that both the lens-barrels and both the gears may be initially made into an integral configuration. One ends of both the lens-barrels are extended from one side of the gear box, where reflecting member holders 20 and 21 are fixed by, for example, ring nuts 22 and 23 so that they can be rotated with the lens-barrels. Reflecting members, for example, rectangular prisms 24 and 25 are respectively secured to the reflecting member holders 20 and 21 by reflecting member protective covers 26 and 27 and leaf springs 28 and 29, and lens-barrels 30 and 31 for holding lenses or the like or being connected to other optical systems and other appliances as necessary are also secured thereto. The lens-barrel 30 is formed at its outer end with external threads 32 to be connected to other devices, and an anti-loosening nut 33 is fitted therein. On the other hand, the lens-barrel 27 is formed at an inner surface of an outer end thereof with internal threads 34 to be connected to other devices.

On the other side of the gear box 11, reflecting members having reflecting surfaces M2 and M3, respectively, for example, rectangular prisms 35 and 36 are placed in close contact with a plane portion of the gear box part 12 and a protruding portion 37 provided outwardly in the center thereof, and fixed by leaf springs 39 and 40 interposed in a reflecting member protective cover 38. The protruding portion 37 is formed with a through -hole 41 about the optical axis A3, and a lens or a filter can be interposed therein as necessary.

In Fig. 12, normally, the length of the second optical axis A2 is equal to that of the fourth optical axis A4, and accordingly, the first optical axis A1 ad the fifth optical axis A5 can be turned within the same vertical surface and stand in a straight line at a basic position where all the optical axes are within the same plane.

Fig. 14 is a bird's-eye view in which the present apparatus 10 is utilized as an eye portion of a telescope 50. Reference numeral 51 designates an eyepiece. Fig. 15 shows, instead of a cantilever type as in Fig. 14, one embodiment of the present apparatus in which a reinforcing side plate 42 is provided on the opposite side of the reflecting member protective cover 38 to support the lens-barrels 30 and 31 from both sides.

In the case where the optical system of the present invention is utilized for a large optical appliance, its weight increases. It is therefore contemplated that as a prism, a light-weight plane reflecting mirror can be used. In this case, a great strength is required. It is therefore suggested that a sectional shape of the reflecting member holders 20 and 21 shown in Fig. 12 is changed from an 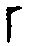 L 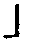 letter shape into a 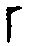 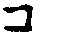 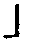 letter shape or a 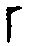 □ 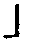 letter shape, and on the side opposite to the mounting positions of the hollow-shafts, lens-barrels 14 and 15 are provided new shafts, respectively, in coaxial therewith. The new shaft may be supported by the renforcing side plate 42 shown in Fig. 15. That is, it is recommended that the pair of reflecting member holders are supported so as to be sandwiched between the gear box and the reinforcing member. According to this method, since the reflecting member holder is supported from both sides, there exists no 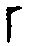 gouge 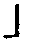 or 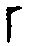 one-sided wear 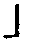 which tends to occur in case of one-side supporting, thus rendering the maintenance of high accuracy easy.

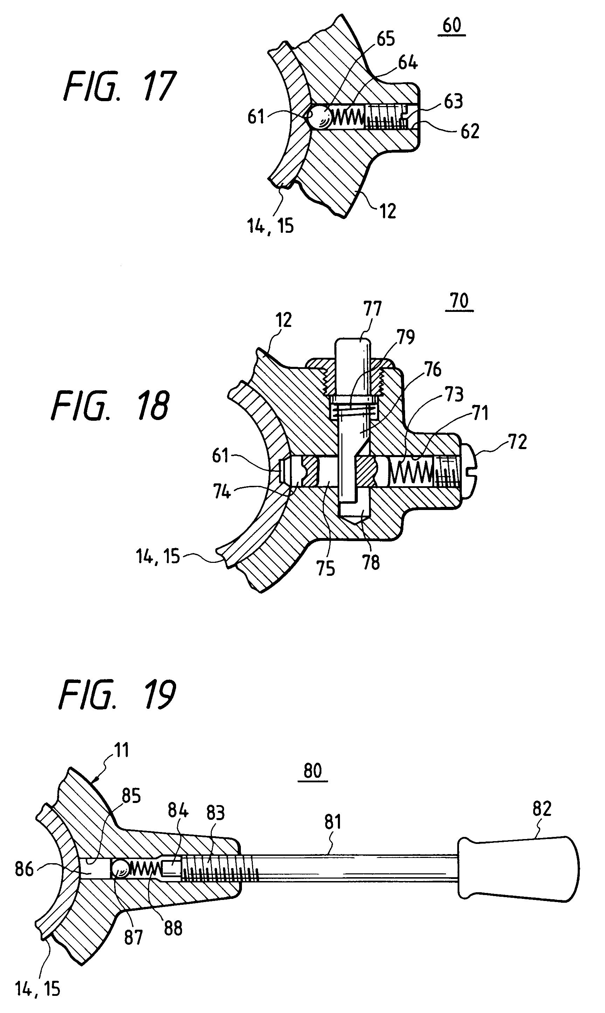

The present apparatus 10 can be utilized as a expandable eye portion within the entire optical apparatus as shown in Figs. 14 and 16, as a center portion of an optical apparatus whose body can be expanded, contracted and folded as shown in Fig. 17, and as an expandable and contractible objective portion as shown in Fig. 18.

Reverting to Fig. 13, when the other lens-barrel 31 is moved to a position indicated by the chain lines while the lens-barrel 30 through which the first optical axis A1 passes remains fixed, the gear box 11 also simultaneously moves to the position indicated by the chain lines. The range of possible movement of one lens-barrel to the other is nearly 360° as can be seen in the twofold telescope 50 shown in Fig. 17 unless a large obstructive member is mounted on either lens-barrel. In this apparatus, reference numeral 52 designates an objective lens-barrel, and reference numeral 51 designates an eye lens-barrel. This ground telescope can observe an erect image of an objective in a wide range including an observer's upper and lower, left and right and oblique without moving the observer's head. The imaginary line indicates a position of an objective lens-barrel when the objective lens-barrel 52 is turned counterclockwise by 360°

Fig. 18 shows an example in which the present invention is embodied so that a ground telescope by which the objective portion 52 can be expanded, contracted, risen and fallen is supported by a mount 53 capable of, for example, vertically tilting and horizontally turning the eye portion 51. The objective portion 52 is connected to the eye portion 51 through the present unit 10 so that it can be rotated also about the optical axis of the eye portion. In this embodiment, in order to observe the situation where for example, an aircraft or a bird flies from the left and upper portion in the drawing to pass over the observer's head, only the objective portion 52 is allowed to follow the objects, and then the observer can observe the situation that the object passes over his head rarely moving his body.

It is suggested that the telescope 50 shown in Figs. 16 to 18 is provided with a click stop device 60 as shown in Fig. 19 so that the telescope can be quickly returned to its straight expanded state when in use. That is, a conical depression 61 is provided in an outer peripheral surface of either of the lens-barrels 14 and 15 (Fig. 12) having the gears, respectively, secured thereto, whereas a steel ball 65 is pressed against the outer peripheral surface of the lens-barrel through a spring 64 by means of a press screw 63 screwed into the through-hole 62 provided in the gear box body. When the telescope 50 assumes an accurate straight expanded state, the ball 65 is fitted into the depression 61, whereby the telescope can be lightly held at that position.

In addition, if a click stop device is constituted by making use of a space between teeth of either gear G1 or G2 in place of the depression 61 of the lens-barrel, the thickness of the gear box can be minimized.

As described above, the telescope capable of being, easily placed in the straight expanded state is very convenient for a fixed type or a tripod type for observations and monitoring. The reason is that in order to easily and rapidly arrest a target at the first, the optical axis of the objective portion and the optical axis of the eye portion are advantageous to lie in a straight line or parallel. After the arrest of a target, a user may adjust an angle of the eye portion to himself.

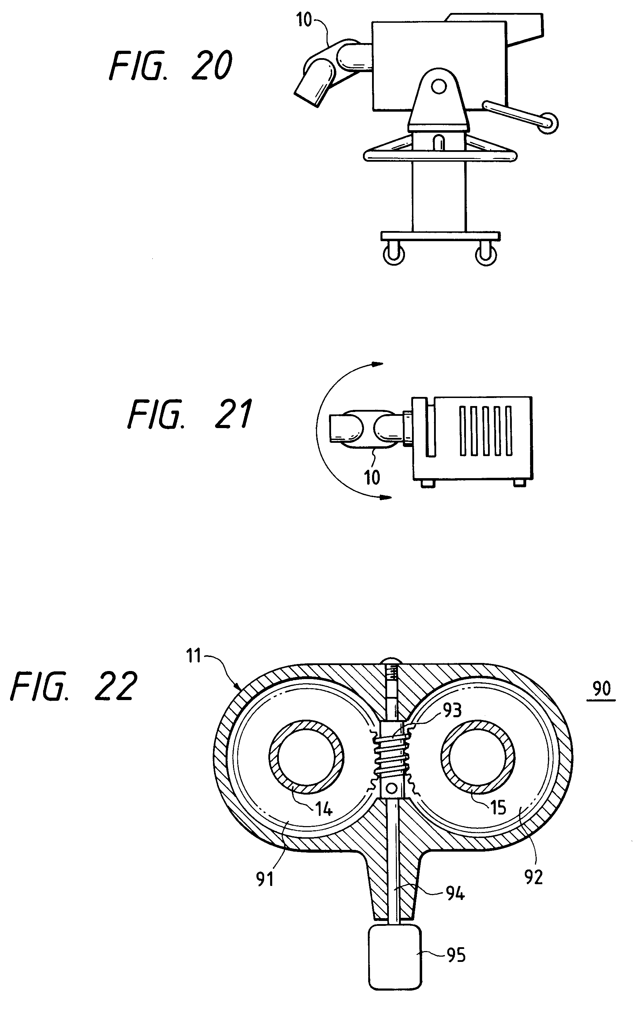

Further, in the case where use is often made with a telescope fixed at the straight expanded position, a click stop device 70 for releasing the fixed state by means of a push button as shown in Fig. 20 may be used. That is, one of the lens-barrels 14 and 15 (Fig. 12) having gears secured thereto is provided in its outer peripheral surface with a conical depression 61 having a relatively narrow vertical angle, whereas an extreme end of a presser 74 is fitted into the depression through a coil spring 73 by a press screw 72 screwed into the through-hole 71 provided in the gear box body. This presser 74 is formed with a hole 75 through which a plate cam 76 extends. This cam 76 together with a push button 77 continuous thereto slides into a hole 78 which intersects at right angles to the aforementioned through-hole 71. If the telescope is in an accurate straight expanded position, the extreme end of the presser 74 is fitted into the depression 61 so that the telescope can be held at that position. To release this, first, depress the push button 77 so that the cam 76 moves back the presser 74 whereby the extreme end thereof is completely moved out of the depression 61, and the telescope can be bended to a desired angle. When a finger is released from the push button 77, the cam 76 is moved upward within the hole 78 of the presser 74 by means of a returning coil spring 79 whereby the presser 74 advances to push the outer peripheral surface of the lens-barrel and lightly stops at that position.

Fig. 21 shows a manipulator 80 often seen in a pan head for a camera, etc. In this example, an manipulating lever 81 is mounted on a gear box. A knob 82 is secured to the outer end of the manipulating lever 81 and is screwed into a gear box 11 by means of a thread portion 83 formed near the inner end thereof. Further, Further, an extreme end portion 84 causes, for example, one lens-barrel 15 to be pressed by a press member 86 inserted into a hole 85 extending through the wall of the gear box through a steel ball 84, a coil spring 88, etc. This can be used in the following manner. The manipulating lever 81 is turned counterclockwise to untighten the screw, moved to a desired position, and again the manipulating lever is turned clockwise to tighten the screw, then it is fixed at that position.

In addition to the aforementioned various methods for holding the present optical apparatus, there is a relatively effective method which can be used auxiliarily. That is, this method is that a coil spring which acts in a direction opposite to a rotational direction, where the apparatus itself hangs down is interposed between the gear box body and a lens-barrel which also serves as a gear to keep best balance. By doing so, the optical apparatus can be smoothly risen and fallen irrespective of manual or electric means. The effect similar to the above can be also obtained by providing a counter-weight.

If the optical system according to the present invention is incorporated into a telescope from which an erect image is obtained or a telescope from which an inverted image is obtained, there is brought forth an extremely great effect such that a lens-barrel can be expanded, contracted, risen and fallen to a free angle without changing a direction (a rotational phase) of an image, despite the relatively simple construction.

In the optical apparatus for use with observations shown in Figs. 16 to 18, both the objective portion and the eye portion can be banded in the vertical direction, in the lateral direction and in the oblique direction. Therefore, an astronomical observation, a surveying work, a bird watching, etc. can be enjoyed in a very easy or comfortable attitude. Of course, since the present apparatus can be applied to various microscopes, the fatigue of an user can be greatly relieved. For others, the present apparatus can be also applied to a camera's finder. In this case, where a camera or a large telescope is used in a narrow place and when there is not enough room for a human head to enter into a space between an eye portion of a finder or an eye portion of a telescope and a ceiling or a wall behind, observations and photographing were made possible by directing the eye portion sideways.

Fig. 22 shows a large television camera for a studio in which the optical system 10 of the present invention is attached to a front portion of a photographing lens. Apart from panning, the tilting of a camera of this kind is that, due to the restriction caused by the construction of a mount and the lock in mobility caused by the weight of a camera body, a position of a support point is too low despite the weight of the camera body is great so that at the time of tilting with a large angle, it required a great force to hold the camera. However, by attaching the present optical system to the front portion of the photographing lens, it becomes possible to carry out the tilting photographing in a range of a large angle without requiring to tilt the camera body. In this case, it is advantageous to use a reflecting mirror in place of a prism which increases the weight. As the construction to be recommended, the apparatus of the present invention is merely placed over the photographing lens on the camera side instead of integrally incorporating the photographing lens into the optical apparatus.

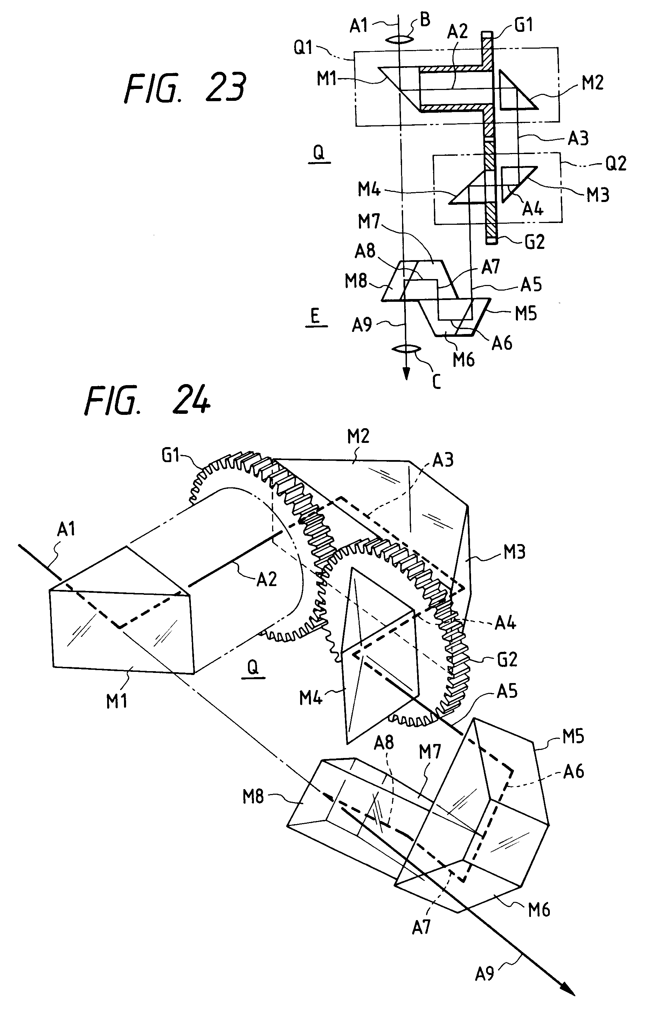

Fig. 23 shows a slide projector provided with a projection lens-barrel making use of the optical unit according to the present invention. If this apparatus is used, it is possible to make projection not only on the screen installed in front but also on the ceiling or aide wall without requiring any movement of the body.

In the case where the optical unit according to the present invention is applied to the telescope lens barrel, the photographing lens barrel, the projection lens barrel, the eyepiece lens barrel, etc., they can be expanded or contracted in the vertical direction (within the vertical surface),in the horizontal direction (within the horizontal plane) or in the oblique direction by supporting them so that the latter can be rotated about one of the aforementioned first optical axis A1 and the fifth optical axis A5. This can be done manually or electrically, or can be done with an inching device composed of a worm and a worm wheel interposed.

The apparatus making use of the optical unit according to the present invention is slightly greater in weight than the zenith prism (a part indicated at reference numeral 1 in Fig. 1) for the previously mentioned astronomical telescope. In particular, if the appliance is mounted to he vertically movable, the gear box or the lens-barrel portion at the end sometimes naturally hangs down. There are contemplated several methods for supporting the present optical unit at a given position while avoiding the above. Among them, typical methods will be described below.

As the first example, there is a braking device 90 which also serves as an inching device making use of a worm gear device. In place of a pair of worm wheels 91 and 92 received in a gear box 11, a worm 93 is interposed therebetween, and a manually rotating knob 95 is secured to the end of an externally protruded worm shaft 94. When the knob 95 is turned, the worm 93 rotates. the two worm wheels 91 and 92 meshed with the worm 93 are rotated symmetrically with each other, whereby not only the objective lens-barrel, the projection lens-barrel, the photographing lens-barrel or the eyepiece lens barrel can be turned in the direction as desired but also the lens-barrel is neither moved nor oscillated unless the knob 95 is turned. With this, the observations, the photographing and the projection can be made in the stabilized mode.

Although not shown, if the worm 93 is rotated by a flexible shaft which extends outwardly of the gear box, the apparatus can be very easily used. The use of this flexible shaft is a method often seen in an astronomical telescope or the like.

Alternatively, a reversible small motor can be mounted on the gear box 11 to rotate the worm without depending on the manual operation as described above.

In the case where the optical unit is applied to the telescope lens-barrel, the photographing lens-barrel, the projection lens-barrel, the eyepiece lens-barrel, etc., they can he expanded or contracted in the vertical direction (within the vertical plane), in the horizontal direction (within the horizontal plane) or in the oblique direction by supporting these members so that the latter can be rotated about one of the first optical axis A1 and the fifth optical axis A5. This can be done by the manual system or electrical system. Further, this can be also done by incorporating an inching device composed of a worm and a worm wheel.

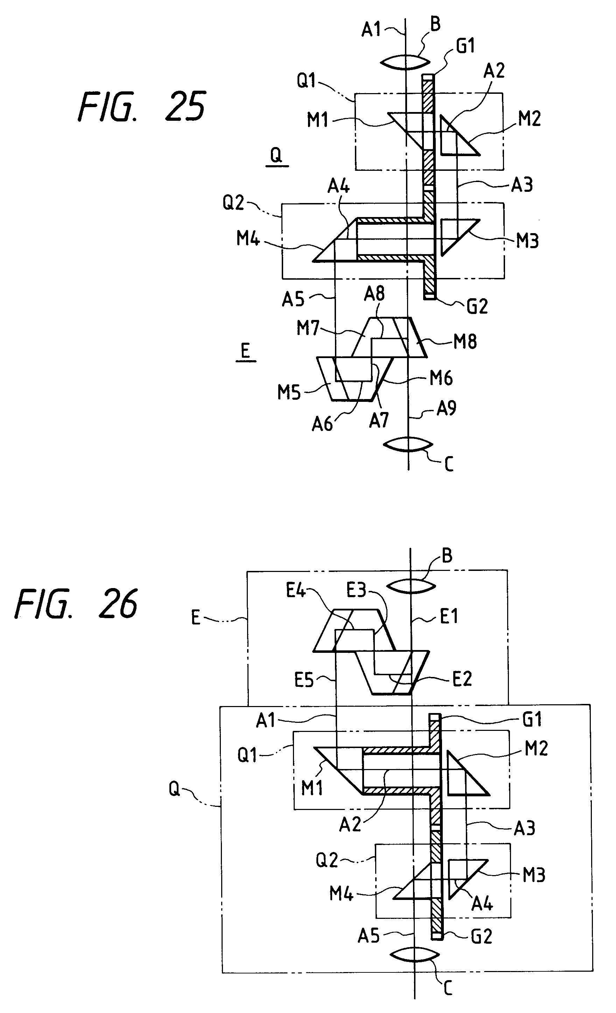

An embodiment to be explained next has a construction that can he easily used particularly as a ground telescope. That is, in the construction schematically shod in Figs. 25 and 26, an erect optical apparatus E is incorporated into the expandable and contractible optical device Q already described in connection with Figs. 3 and 4. The basic position of the expandable and contractible optical device Q is characterized in that an incident optical axis A1 to the expandable and contractible device is placed parallel with the outgoing optical axis from the erect optical apparatus E or in the same straight line.

The explanation is here partly repeated. In the basic position in the expandable and contractible apparatus Q, that is, in the expanded straight state, the first optical axis and the fifth optical axis are in the same plane as that composed of the optical axes A2, A3 and A4; all angles formed between the two optical axes adjacent to each other are right angles; and the first optical axis A1 and the fifth optical axis A5 are parallel with each other and extend in the opposite directions. It is to be noted that the provision of the already described click stop device (Figs. 19 and 20) such that it functions at least at this position is very convenient.

As already described in connection with Figs. 3 and 4, the reflecting members M1 and M4 are supported by the pair of gears G1 and G2 having the same diameter meshed with each other so that they can be symmetrically rotated about the second optical axis A2 and the fourth optical axis A4, respectively.

The fifth optical axis A5 is connected to a ninth optical axis A9 successively via four reflecting members M5-M6-M7-M8 which are constituting members for the erect optical apparatus E. This ninth optical axis is parallel with the first optical axis A1 or in the same straight line when all the optical axes from the first to the fifth optical axes are in the same plane. Both the first optical axis and the ninth optical axis extend outwardly from the reflecting members M1 and M8, namely, in the opposite directions.

The erect optical apparatus E herein shown is known which uses a Porro prism, which can be, however, replaced by an erect optical apparatus using likewise a known roof prism or an intermediate lens for erection. In this case, however, since both the incident optical axis and the exit optical axis of the erect optical apparatus E are in the same straight line each other, the lengths of the second optical axis and the fourth optical axis may be the shortest. Accordingly, the whole structure can be made compact. However, the apparatus using the Porro prism is excellent in terms of the restriction of magnification, the general optical performance, and the relative difficulty of processing.

However, anyhow, it is needless to say that in this embodiment, the expandable and contractible optical apparatus Q and the erect optical apparatus E has one of the conditions that in the case of the straightly extended state, the incident optical axis A1 and the exit optical axis A9 are parallel or in the same straight line, and since being a telescope, necessary lenses are provided. Here, the objective lens and the eye lens are represented by B and C, respectively. These are not depicted proportional to the actual size, similar to other parts. That is, the reduction rate is not even.

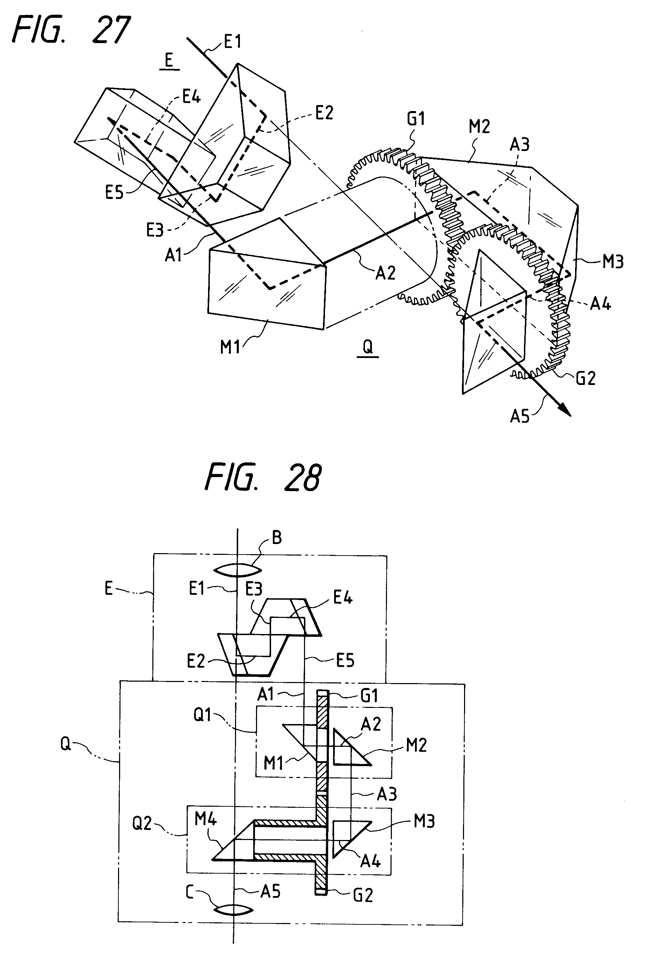

The arrangement of parts can be changed as shown in Fig. 27. This arrangement is made so that the weights of parts can be distributed as even as possible on opposite side of a line joining the incident optical axis and the exist optical axis.

As described above, the telescope capable of being placed in the extended straight state is very convenient for the fixed type or the tripod type for observations and monitoring. Because it is advantageous that the optical axis of the objective portion and the optical axis of the eye portion are parallel or in the straight line in order to easily and rapidly arrest a target. After the arrest of a target, a user may adjust an angle of the eye portion to himself.

In the embodiments shown in Figs. 28 to 30 likewise as a ground telescope, the erect optical apparatus e arranged following the expandable and contractible optical apparatus Q in the embodiment show in Figs. 25 to 27 is conversely arranged prior to the expandable and contractible optical apparatus. Here, a series of optical axes from the incident optical axis to the exit optical axis of the erect optical apparatus E are indicated by reference numerals E1, E2, E3, E4 and E5. Other reference numerals are the same as those in the aforementioned embodiments.

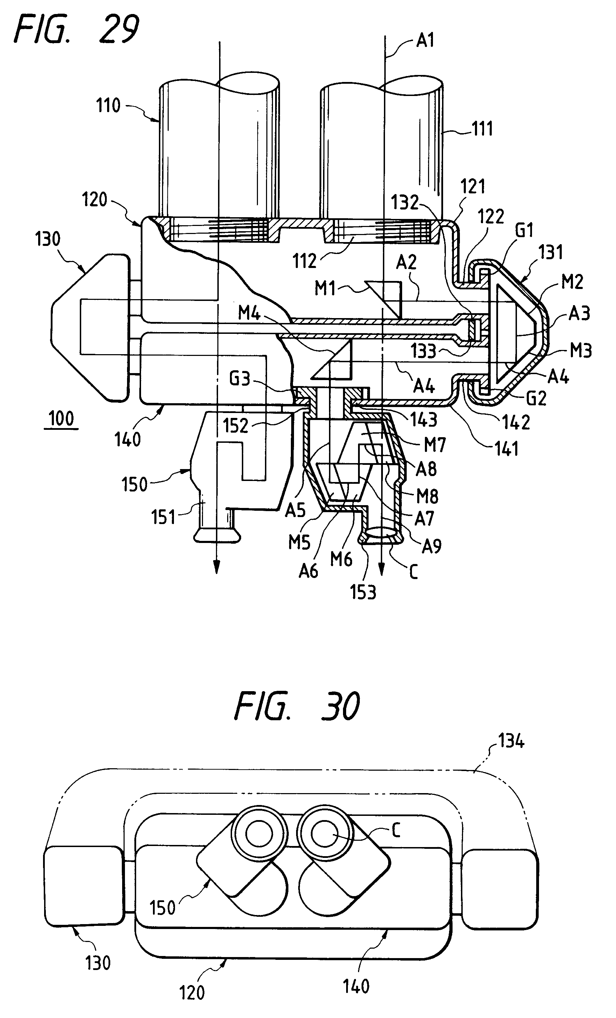

In the configuration shown in Fig. 30, the weights of parts are distributed as even as possible to opposite sides of a line joining the incident optical axis and the exist optical axis by changing the arrangement of parts in Fig. 28.

While in the above-described embodiments, an ocellar type has been described, a binocular type telescope will now be described. Here, the basic way of thinking can be applied to the binocular telescope.

Conventional large binocular telescopes are not of a hand-carrying type but a fixed type. The height thereof is determined accoroding to a tripod or a mount. Therefore, the height of a target, the height of a binocular telescope and the height of eyes of a viewer are often not in a straight line. In such a case, it was necessary to adjust the height of a binocular telescope to a viewer, or to have a viewer stood on tiptoe, or to have a viewer curled up to lower his head.

A principal object of this embodiment is to provide an apparatus in which an incident optical axis portion and an exit optical axis portion are associated so that they can be relatively expanded and tilted, in order to overcome various inconveniences caused by the fact that the optical axes cannot be freely expanded and tilted in the conventional large binocular telescope as described above.

This can be said in connection with all binocular type optical apparatuses. Since a distance between pupils is different due to an individual difference of viewers, it is necessary to provide an adjusting device therefor. However, in the binocular of the present invention, the object is achieved by employing a special construction for expanding and tilting an eye portion.

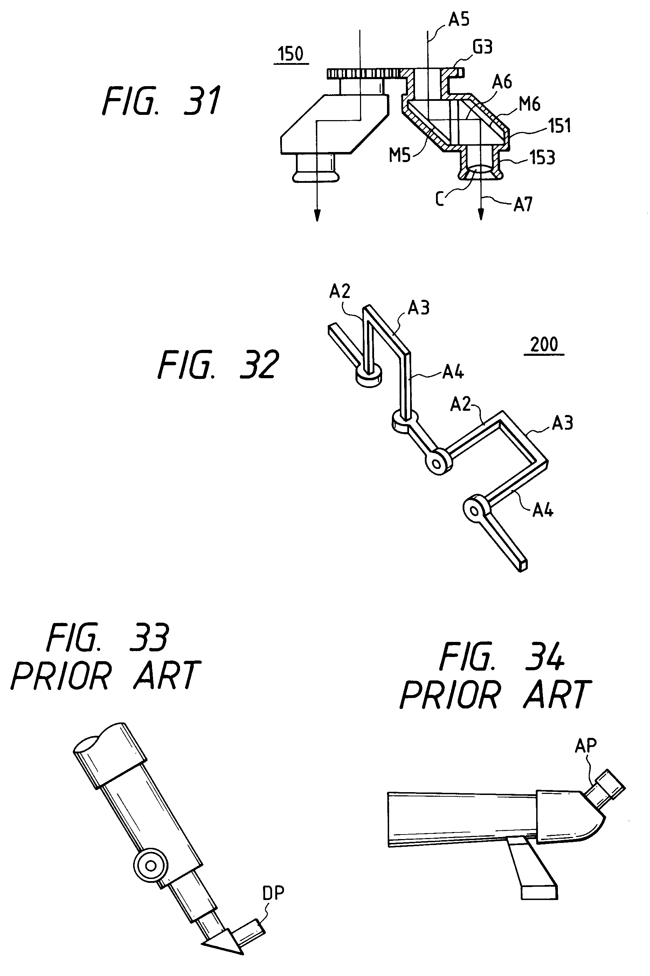

Fig. 31 shows an embodiment in which two paired sets of the basic mechanisms shown in Figs. 25 and 26 are symmetrically combined, and both erect optical apparatuses are associated to be rotated symmetrically with each other about the respective fifth optical axes A5.

The entirety of this binocular telescope 100 is composed of five portions including an objective portion 110, a support portion 120, a relay portion 130, a tilting portion 140 and an eye portion 150.

The objective portion 110 comprises a pair of lens-barrels 111 having an objective lens (not shown) mounted thereon, each of the lens-barrels 111 being screwed in and secured to a block 121 of the support portion 120 by means of a screw 112 formed at each base. The aforementioned reflecting member M1 is mounted interiorly of the block 121. Ring gears G1 are mounted on both left and right ends of the block. The ring gears G1 are meshed with ring gears G2 having the same diameter secured to both left and right ends of a casing 141 of the tilting portion 140 within a casing 131 of the relay portion 130.

The relay portion 130 comprises a pair of left and right symmetrical portions. Each relay portion is composed of a casing 131, reflecting members M2 and M3 secured interiorly thereof, and said pair of left and right ring gears G1 and G2. Both the casings 131 are internally provided with bearing holes 132 and 133 for airtightly supporting left and right hollow necks 122 of the block 121 and a hollow neck 142 of the casing 141 of the tilting portion 140 so that they can be rotated smoothly. As will be apparent from Fig. 32, the pair of relay portions are combined and integrated together by a connecting member 134 for maintaining high rigidity and high accuracy.

The tilting portion 140 is composed of a casing 141, a pair of left and right ring gears G2 secured to the hollow necks 142 on both left and right ends and meshed with the aforementioned pair of ring gears G1, a pair of reflecting members M4, and a pair of bearing holes 143 for airtightly supporting hollow necks 152 of a pair of eye portion casings 151.

An eye portion 150 comprises a pair of left and right symmetrical portions, each portion being composed of a casing 151, a Porro prism erect optical apparatus secured therein, a pair of ring gears G3 secured to the end of the hollow neck 152 of the casing and meshed with each other within the tilting casing 141, and an eye lens-barrel 153 having an eye lens C mounted thereon.

The pair of left and right eye portions can be opened and closed symmetrically to left and right by hands about the respective fifth optical axis A5. Accordingly, a user may determine an opening between the eye lens-barrels while adjusting to the distance between own pupils.

As in the former case, in starting the use of the binocular telescope, the click stop device 60 shown in Fig. 19 may be provided so that the incident optical axis and the exit optical axis can be promptly placed in the straight line, that is, returned to the expanded straight state.

In the case where use is often made with the axes locked at the expanded straight position, a locating device 70 may be used to release the locked state by means of a push button as shown in Fig. 20.

In order to open at maximum the distance between the exit optical axes of both eye portions, the provision of a stopper at that position will suffice.

In the eye portion shown in Fig. 33, both the sixth optical axis A6 and the seventh optical axis A7 are integrally rotated symmetrically with each other by the pair of gears G3 meshed with each other similar to the eye portions shown in Figs. 31 and 32, whereby the distance beween the pupils can be adjusted. While in this case, the erect optical apparatus is provided between the first optical axis and the fifth optical axis, it is to be noted that this can be a Porro prism or a roof prism. Alternatively, lenses may he increased to make an inverted image into an erect one. The eye portion itself has no erect function.

The binocular telescope according to the present invention is free to expand and tilt throughout all the embodiments and is configured so that even if it is expanded and tilted, the visual field is not rotated. Furthermore, even in case of a large tilting angle, a user can make observations and monitoring in an easy attitude irrespective of his physique, thus remarkably reducing the user's fatigue.

Moreover, in any of the above-described embodiments, the distance between pupils can be adjusted without influencing on the optical performance at all.

Fig. 34 is a bird's-eye view shoving in a conceptual manner an optical system 200 which is one of embodiments in which in two sets of the present optical systems, one first optical axis and the other fifth optical system are connected in series so that the two planes perpendicularly intersect at the basic position in which all optical axes are in the same plane.

When this is applied to an astronomical telescope, an extremely great effect is obtained. That is, if an astronomical telescope using one end of the optical system as an eye portion and the other as an objective portion is set in a stationary state, and a symmetrical articulating motion by two sets of gear boxes is carried out by a computer-controlled electric inching device. Then, a viewer can make an astronomical observation nearly over the whole sky without moving or changing the attitude of himself. Incidentally, also in the current the astronomical observation using an astronomical telescope, the arrest and tracking of the desired heavenly bodies can be automatically carried out by the computer control. But, a viewer is forced to take an unnatural attitude as usual.

Further, in the photographic lens to which the principle of this embodiment is applied, a mount portion thereof is mounted on a camera body or a television camera body whereby the objective portion can be moved over the whole spherical direction with said body remained immovable, thus enabling the photographing of an object which is present in all directions.

Furthermore, projection lenses to which the principle of this embodiment is applied can he moved so as to cover a major portion in the whole spherical direction in the state where if one thereof is fixed to the projector body, the other end remains immovable. Accordingly, this can be used to project an erect image on the inner wall of a cylindrical building or on the inner wall of a dome.

The present invention is not limited to the aforementioned explanations but various additions or various changes can be made within the subject matter of the present invention.

The present invention being configured as described above, the present invention has the following effects:

The optical system according to the present invention is free to expand and tilt, and even if it is expanded or tilted, the visual field is not rotated. Accordingly, particularly, a refracting astronomical telescope in which the present optical system is applied to the eye portion can make observation in an easy attitude even if a tilting angle of a target is large irrespective of a user's physique, thus enabling remarkable relief of the fatigue to the user. Such effects can be similarly obtained in the cases where the optical system according to the present invention is applied to other optical appliances which require to change the direction of an objective portion and which are often used for long periods of time, for example, such as a normal ground telescope, a bird watching telescope often used with a relatively large angle of elevation, a monitoring or sight-seeing binocular telescope used with a relatively wide range of tilting angle, and telescopes to be attached to various kinds of surveying appliances.

The optical system according to the present invention is free to expand and tilt, and can be configured such that when being placed in the expanded straight state, an incident optical axis and an exit optical axis can be placed in a straight line. Therefore, a fixed type telescope making use of this can he used in the expanded straight state in arresting a target, and immediately after the arrest of a target, the eye portion can be bended to an angle as desired by the user. Thus, it is easy to arrest ad observe a target which moves at relatively high speed. The telescopes of this kind include various optical appliances which often require to change the direction of an objective portion, for example, such as a normal ground telescope, a bird watching telescope often used with a relatively large angle of elevation, a monitoring or sight-seeing binocular telescope used with a wide range of tilting angle, and telescopes to be attached to various kinds of surveying appliances.

The optical system according to the present invention is free to expand and tilt, and even if it is expanded or tilted, the visual field is not rotated. Therefore, when this is applied to an ocellar or binocular microscope in which an objective portion is rarely moved, particularly to a working microscope or a microscope for operation which involves a long using time, not only the fatigue of an user can be relieved but the working efficiency can be improved because an angle of an eye portion an be freely changed adjusting to the physique or attitude or the change in attitude caused by the fatigue of an user, thus enabling the relief of fatigue of an user and the improvement in the working efficiency.

The optical system according to the present invention is free to expand and tilt, and even if it is bended, the bended portion does not form a zigzag configuration but only one side is bended. Therefore, if this is applied to a large optical appliance, such an optical appliance is effectively miniaturized, carried and received.

The optical system according to the present invention is free to expand and tilt, and even if it is bended, the handed portion does not form a zigzag configuration but only one side is bended. Therefore, if this is applied to an optical appliance which is combined with other appliances or which is incorporated into other appliances, it is convenient for use and storage.

Since the optical system according to the present invention is free to expand and tilt, if this is applied to a telescope, a viewer can observe the other party with the direction of the eye portion greatly displaced from that of the objective portion, that is, with the head of the viewer remained directed at the direction separately from the object, or while putting himself out of sight, thus being less noticed. Accordingly, it is possible to provide a telescope which has remarkable effects for reconnaissance and hunting.

The optical system according to the present invention is free to expand and tilt. If this is applied to a finder of a camera, even in the case where no space is available above or behind the camera for the head depending on the installation place, a viewer can observe an object as an erect image from sideways.

If the optical system according to the present invention is applied to a photographic lens-barrel of a broadcasting large television camera, the photographic lens-barrel can be bended in a free direction without rarely moving the camera body, and the image itself is not rotated in any direction.

If the optical system according to the present invention is applied to a photographic lens, only the objective portion can be directed at the object with the direction of the camera remained directed at the direction separately from the photographic object, thus being less noticed. Accordingly, this can be effectively used as a camera lens for reconnaissance and study on the mode of life of animals.

The optical system according to the present invention is free to expand and tilt. If this is applied to a projection lens of a slide projector or a projection lens of a projector, even when it is expanded or tilted, a projected image is not rotated. Accordingly, it becomes possible to project an image on the ceiling or side walls without changing a position of the body.

In the optical system of the present invention, if an embodiment in which two sets of basic configurations thereof are connected in series is applied to a telescope, a great effect is obtained. That is, an astronomical telescope using one end of the optical system as an eye portion and the other end as an objective portion is set in a state where the eye portion is placed in a stationary manner, and a symmetrical articulation motion by two sets of gear boxes is effected by a computer-controlled electric inching device. Then, a viewer can make astronomical observation over the whole sky without moving or changing the attitude of himself.

In a photographic lens according to the embodiment in which two sets of basic configurations of the optical system according to the present invention are connected in series, a mount portion thereof is mounted on the camera body or on the television camera body whereby the objective portion can he moved over the whole spherical direction while keeping the aforesaid body immovable. It is therefore possible to photograph an object which is present in all directions.

In a projection lens according to the embodiment in which two sets of basic configurations of the optical system according to the present invention are connected in series, if a mount portion thereof is locke to the slide projector body or the projector body, the other end can be moved so as to cover a major portion in the whole spherical direction while keeping the aforesaid body immovable. It is therefore possible to use this to project an erected image on the inner walls of a cylindrical building structure or on the inner walls of the dome.

## Claims

1. (Basic type)
An expandable and tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 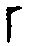 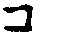 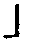 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis.

2. (Basic type + rotational support)
An expandable and tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third aixs and the fourth axis are arranged in the same plane in the form of 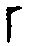 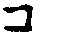 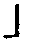 shape, one ends of the first axis and the fifth axis being perpendicular to the other ends of the second optical axis and the fourth optical axis, the first optical axis and the fifth optical axis being associated to be rotatable in symmetrical synchronism with each other about the second optical axis and the fourth optical axis, further the whole body being supported rotatably about at least one of said first optical axis and said fifth optical axis.

3. (Basic type + lenses)
An expandable and tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 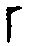 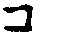 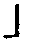 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths.

4. (Basic type + rotational support + lenses)
An expandable and tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 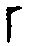 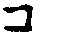 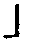 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchornism with each other about the second optical axis and the fourth optical axis, further the whole body being supported rotatably about at least one of said first optical axis and said fifth optical axis, and lenses being provided where necessary in the light paths.

5. (Basic type + subsequent erect optical system + lenses)
An expandable and tiltable optical system comprising a combination of a tiltable optical system and an erect optical system subsequent to said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 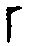 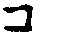 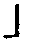 shape, one ends of the first axis and the fifth axis being perpendicular to the other ends of the second optical axis and the fourth optical axis, the first optical axis and the fifth optical axis extending in the opposite directions at a basic position at a basic position when the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination.

6. (Basic type + subsequent erect optical system + rotational support)
An expandable and tiltable optical system comprising a combination of a tiltable optical system and an erect optical system subsequent to said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 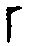 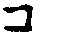 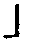 shape, one ends of the first axis and the fifth axis being perpendicular to the other ends of the second optical axis and the fourth optical axis, the first optical axis and the fifth optical axis extending in the opposite directions at a basic position when all the axies from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination, and the whole body being supported rotatably about at least either said first optical axis or an exit optical axis of said erect optical system.

7. (Basic type + subsequent erect optical system + lenses + same straight line)
An expandable and tiltable optical system comprising a combination of a tiltable optical system and an erect optical system subsequent to said tiltable optical system, said tiltable optical system comprising a series of light paths successively formed via reflecting members, said light paths including at least five optical axes from a first optical axis to a fifth optical axis constituting center axes thereof, the second axis and the fourth optical axis being parallel with each other, one ends on the same side thereof being perpendicular to both ends of the third optical axis, as a result of which the second aixs, the third axis and the fourth axis are arranged in the same plane in the form of 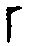 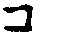 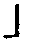 shape, one ends of the first axis and the fifth axis being perpendicular to the other ends of the second optical axis and the fourth optical axis, the first optical axis and the fifth optical axis extending in the opposite directions at a basic position when all the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination, and at the basic position, the first optical axis and an exit optical axis of the erect optical system being on the same straight line.

8. (Basic type + subsequent erect optical system + same straight line + rotational support)
An expandable and tiltable optical system comprising a combination of a tiltable optical system and an erect optical system subsequent to said tiltable optical system, said tiltable optical systems comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 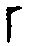 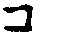 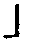 shape, one ends of the first axis and the fifth axis being perpendicular to the other ends of the second optical axis and the fourth optical axis, the first optical axis and the fifth optical axis extending in the opposite directions at a basic position when all the axes from the first optical axis to the fifth optical axis are placed in the same plane, and the first optical axis and the fifth optical axis being associated to be rotatable in symmetrical synchornism with each other about the second optical axis and the fourth optical axis, further lenses being provided where necessary in the light paths in the whole combination, at the basic position the first optical axis and an exit optical axis of the erect optical system being on the same straight line, and the whole body being supported rotatably about at least either said first optical axis or said exit optical axis of said erect optical system.

9. (Basic type + preceding erect optical system + lenses)
An expanable and tiltable optical system comprising a combination of a tilable optical system and an erect optical system preceding said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 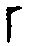 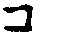 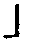 shape, one ends of the first axis and the fifth axis being perpendicular to the other ends of the second optical axis and the fourth optical axis, the first optical axis and the fifth optical axis extending in the opposite directions at a basic position when the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination.

10. (Basic type + preceding erect optical system + lenses + rotational support)
An expandable and tiltable optical system comprising a combination of a tiltable optical system and an erect optical system preceding said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 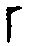 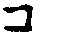 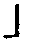 shape, one ends of the first axis and the fifth axis being perpendicular to the other ends of the second optical axis and the fourth optical axis, the first optical axis and the fifth optical axis extending in the opposite directions at a position when the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination, and the whole body being supported rotatably about at least either an incident optical axis of said erect optical system and said fifth optical system.

11. (Basic type + preceding erect optical system + lenses + same straight line)
An expandable and tiltable optical system comprising a combination of a titable optical system and an erect optical system preceding said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and fourth axis are arranged in the same plane in the form of 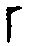 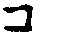 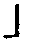 shape, one ends of the first axis and the fifth axis being perpendicular to the other ends of the second optical axis and the fourth optical axis, the first optical axis and the fifth optical axis extending in the opposite directions at a position when all the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination, and at the basic position, an incident optical axis of the erect optical system and the fifth optical axis being on the same straight line.

12. (Basic type + preceding erect optical system + lenses + same straight line + rotational support)
An expandable and tiltale optical system comprising a combination of a tiltable optical system and an erect optical system preceding said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 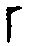 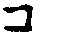 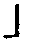 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided at a basic position where necessary in the light paths in the whole combination, at the basic position an incident optical axis of the erect optical system and the fifth optical axis being on the same straight line, and the whole body being supported rotatably about at least either an incident optical axis of said erect optical system and said fifth optical axis.

13. (Two sets of basic types rotatably combined)
An expandable and tiltable optical system comprising a set of optical systems each comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 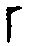 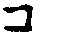 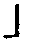 shape, one ends of the first axis and the fith axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchornism with each other about the second optical axis and the fourth optical axis; and a further set of optical systems configured similarly to the first mentioned set of optical systems, either the fifth optical axis and the other first optical axis being connected in series to be rotatable each other.

14. (Two sets of basic types combined with planes perpendicularly intersecting each other)
An expandable and tiltable optical system comprising a set of optical systems each comprising a series of light paths successively formed via reflecting memebrs, said light paths including at least five optical axes from a first optical axis to a fifth optical axis constituting center axes thereof, the second axis and the fourth axis being parallel with each other, one ends on the same side thereof being perpendicular toboth ends of the third optical axis, as a result of which the second axis, the third axis and the fourth axis are arranged in the same plane in the form of 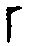 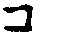 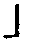 shape, one ends of the first axis and the fifth axis being perpedicular to the other ends of the second optical axis and the fourth optical axis, the first optical axis and the fifth optical axis extening in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis; and a further set of optical systems configured similarly to the first-mentioned set of optical systems, either fifth optical axis and the other first optical system being connected in series so that two sets of said planes including the first optical axis to the fifth optical axix belonging to the respective optical systems perpendicularly intersect.

15. (Two sets of basic types rotatably combined + lenses)
An expandable and tiltable optical system comprising a set of optical systems each comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 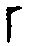 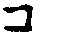 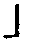 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the seond optical axis and the fourth optical axis; and a further set of optical systems configurred similarly to the first-mentioned set of optical systems, either the fifth optical axis and the other first optical axis being connected in series to be rotatable each other, and lenses being provided where necessary in the whole light path.

16. (Two sets of basic types combined with planes perpendicularly intersecting each other)
An expandable and tiltable optical system comprising a set of optical systems each comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 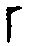 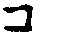 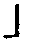 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the seond optical axis and the fourth optical axis; and a further set of optical systems configurred similarly to the first-mentioned set of optical systems, either fifth optical axis and the other first optical axis being connected in column so that two sets of planes including the first optical axis to the fifth optical axis belonging to the respective optical systems perpendicularly intersecting each other, and lenses being provided where necesary in the whole light path.

17. (Basic type) (hereinafter apparatuses)
An expandable and tiltable optical apparatus comprising a series of light paths successively formed via relfecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 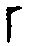 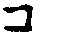 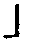 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis.

18. (Basic type + rotational support)
An expandable and tiltable optical apparatus comprising a series of light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third aixs and the fourth axis are arranged in the same plane in the form of 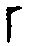 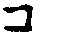 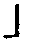 shape, one ends of the first axis and the fifth axis being perpendicular to the other ends of the second optical axis and the fourth optical axis, the first optical axis and the fifth optical axis being associated to be rotatable in symmetrical synchronism with each other about the second optical axis and the fourth optical axis, further the whole body being supported rotatably about at least one of said first optical axis and said fifth optical axis.

19. (Basic type + lenses)
An expandable and tiltable optical apparatus comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 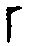 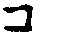 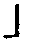 shape, one ends of the first axis and the fifth axis being perpendicular to the other ends of the second optical axis and the fourth optical axis, the first optical axis and the fifth optical axis extending in the opposite directions at a basic when the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths.

20. (Basic type + rotational support + lenses)
An expandable and tiltable optical apparatus comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 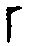 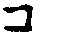 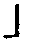 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchornism with each other about the second optical axis and the fourth optical axis, further the whole body being supported rotatably about at least one of said first optical axis and said fifth optical axis, lenses being provided where necessary in the light path.

21. (Basic type + subsequent erect optical system + lenses)
An expandable and tiltable optical apparatus comprising a combination of a tiltable optical system and an erect optical system subsequent to said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 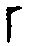 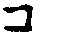 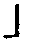 shape, one ends of the first axis and the fifth axis being perpendicular to the other ends of the second optical axis and the fourth optical axis, the first optical axis and the fifth optical axis extending in the opposite directions at a basic position at a basic position when the axes from the first optical axis to the fifth optical axis are placed in the same plane, and the first optical axis and the fifth optical axis being associated to be rotatable in symmetrical synchronism with each other about the second optical axis and the fourth optcal axis, further lenses being provided where necessary in the light paths in the whole combination.

22. (Basic type + subsequent erect optical aparatus + rotational support)
An expandable and tiltable optical apparatus comprising a combination of a tiltable optical apparatus and an erect optical apparatus subsequent to said tiltable optical apparatus, said tiltable optical apparatus comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 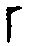 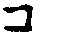 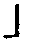 shape, one ends of the first axis and the fifth axis being perpendicular to the other ends of the second optical axis and the fourth optical axis, the first optical axis and the fifth optical axis extending in the opposite directions at a basic position when all the axies from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination, and the whole body being supported rotatably about at least either said first optical axis or an exit optical axis of said erect optical apparatus.

23. (Basic type + subsequent erect optical apparatus + lenses + one straight line)
An expandable and tiltable optical apparatus comprising a combination of a tiltable optical apparatus and an erect optical apparatus subsequent to said tiltable optical apparatus, said tiltable optical apparatus comprising a series of light paths successively formed via reflecting members, said light paths including at least five optical axes from a first optical axis to a fifth optical axis constituting center axes thereof, the second axis and the fourth optical axis being parallel with each other, one ends on the same side thereof being perpendicular to both ends of the third optical axis, as a result of which the second aixs, the third axis and the fourth axis are arranged in the same plane in the form of 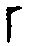 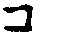 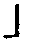 shape, one ends of the first axis and the fifth axis being perpendicular to the other ends of the second optical axis and the fourth optical axis, the first optical axis and the fifth optical axis extending in the opposite directions at a basic position when all the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination, and at the basic position, the first optical axis and an exit optical axis of the erect optical system being on the same straight line.

24. (Basic type + subsequent erect optical apparatus + one straight line + rotational support)
An expandable and tiltable optical apparatus comprising a combination of a tiltable optical apparatus and an erect optical apparatus subsequent to said tiltable optical apparatus, said tiltable optical apparatus comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 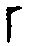 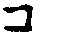 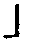 shape, one ends of the first axis and the fifth axis being perpendicular to the other ends of the second optical axis and the fourth optical axis, the first optical axis and the fifth optical axis extending in the opposite directions at a basic position when all the axes from the first optical axis to the fifth optical axis are placed in the same plane, and the first optical axis and the fifth optical axis being associated to be rotatable in symmetrical synchornism with each other about the second optical axis and the fourth optical axis, further lenses being provided where necessary in the light paths in the whole combination, at the basic position the first optical axis and an exit optical axis of the erect optical system being on the same straight line, and the whole body being supported rotatably about at least either said first optical axis or said exit optical axis of said erect optical apparatus.

25. (Basic type + preceding erect optical apparatus + lenses)
An expanable and tiltable optical apparatus comprising a combination of a tilable optical system and an erect optical system preceding said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 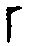 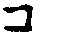 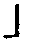 shape, one ends of the first axis and the fifth axis being perpendicular to the other ends of the second optical axis and the fourth optical axis, the first optical axis and the fifth optical axis extending in the opposite directions at a basic position when the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination.

26. (Basic type + preceding erect optical apparatus + lenses + rotational support)
An expandable and tiltable optical apparatus comprising a combination of a tiltable optical system and an erect optical system preceding said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 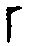 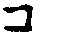 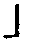 shape, one ends of the first axis and the fifth axis being perpendicular to the other ends of the second optical axis and the fourth optical axis, the first optical axis and the fifth optical axis extending in the opposite directions at a position when the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination, and the whole body being supported rotatably about at least either an incident optical axis of said erect optical system and said fifth optical apparatus.

27. (Basic type + preceding erect optical apparatus + lenses + same straight line)
An expandable and tiltable optical apparatus comprising a combination of a titable optical system and an erect optical system preceding said tiltable optical system, said tiltable optical system comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and fourth axis are arranged in the same plane in the form of 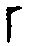 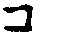 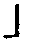 shape, one ends of the first axis and the fifth axis being perpendicular to the other ends of the second optical axis and the fourth optical axis, the first optical axis and the fifth optical axis extending in the opposite directions at a position when all the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided where necessary in the light paths in the whole combination, and at the basic position, an incident optical axis of the erect optical system and the fifth optical axis being on the same straight line.

28. (Basic type + preceding erect optical apparatus + lenses + same straight line + rotational support)
An expandable and tiltale optical apparatus comprising a combination of a tiltable optical apparatus and an erect optical apparatus preceding said tiltable optical apparatus, said tiltable optical apparatus comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 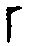 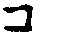 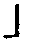 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis, further lenses being provided at a basic position where necessary in the light paths in the whole combination, at the basic position an incident optical axis of the erect optical system and the fifth optical axis being on the same straight line, and the whole body being supported rotatably about at least either an incident optical axis of said erect optical system and said fifth optical axis.

29. (Two sets of basic types rotatably combined)
An expandable and tiltable optical apparatus comprising a set of optical aparatuses each comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 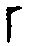 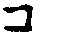 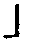 shape, one ends of the first axis and the fith axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchornism with each other about the second optical axis and the fourth optical axis; and a further set of optical apparatuses configured similarly to the first mentioned set of optical apparatuses, either the fifth optical axis and the other first optical axis being connected in series to be rotatable each other.

30. (Two sets of basic types combined with planes perpendicularly intersecting each other)
An expandable and tiltable optical apparatus comprising a set of optical apparatuses each comprising a series of light paths successively formed via reflecting memebrs, said light paths including at least five optical axes from a first optical axis to a fifth optical axis constituting center axes thereof, the second axis and the fourth axis being parallel with each other, one ends on the same side thereof being perpendicular toboth ends of the third optical axis, as a result of which the second axis, the third axis and the fourth axis are arranged in the same plane in the form of 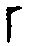 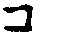 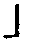 shape, one ends of the first axis and the fifth axis being perpedicular to the other ends of the second optical axis and the fourth optical axis, the first optical axis and the fifth optical axis extening in the opposite directions when all the axes from the first optical axis to the fifth optical axis are placed in the same plane, and the first optical axis and the fifth optical axis being associated to be rotatable in symmetrical synchronism with each other about the second optical axis and the fourth optical axis; and a further set of optical apparatuses configured similarly to the first-mentioned set of optical apparratuses, either fifth optical axis and the other first optical apparatus being connected in series so that two sets of said planes including the first optical axis to the fifth optical axix belonging to the respective optical apparatuses perpendicularly intersect.

31. (Two sets of basic types rotatably combined + lenses)
An expandable and tiltable optical apparatus comprising a set of optical apparatuses each comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 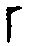 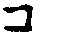 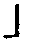 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the seond optical axis and the fourth optical axis; and a further set of optical apparatuses configurred similarly to the first-mentioned set of optical apparatuses, either the fifth optical axis and the other first optical axis being connected in series to be rotatable each other, and lenses being provided where necessary in the whole light path.

32. (Two sets of basic types combined with planes perpendicularly intersecting each other)
An expandable and tiltable optical apparatus comprising a set of optical systems each comprising a series of light paths successively formed via reflecting members, said light paths including at least five optical axes from a first optical axis to a fifth optical axis constituting center axes thereof, the second axis and the fourth axis being parallel with each other, one ends on the same side thereof being perpendicular to both ends of the third optical axis, as a result of which the second axis, the third axis and the fourth axis are arranged in the same plane in the form of 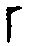 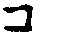 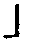 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the seond optical axis and the fourth optical axis; and a further set of optical apparatuses configurred similarly to the first-mentioned set of optical apparatuses, either fifth optical axis and the other first optical axis being connected in column so that two sets of planes including the first optical axis to the fifth optical axis belonging to the respective optical apparatuses perpendicularly intersecting each other, and lenses being provided where necesary in the whole light path.

33. (A binocular optical apparatus )
A expandable and tiltable binocular optical apparatus comprising a set of optical apparatuses each having a series of light paths successively formed via at least reflecting members, said light paths including at least nine optical axes from a first optical axis to a ninth optical axis constituting center axes thereof, the first optical axis constituting an incident optical axies of the whole optical apparatus, the second optical axis and the fourth optical axis being parallel with each other, one ends on the same side thereof being perpendicular to both ends of the third optical axis, as a result of which the second axis, the third axis and the fourth axis are arranged in the same plane in the form of 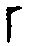 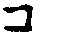 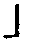 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the seond optical axis and the fourth optical axis, the fifth optical axis to the ninth optical axis being via an erect optical apparatus, the ninth optical axis being an exit optical axis of the whole optical apparatus, being parallel with the fifth optical axis and being supported rotatably about the fifth optical axis together with the sixth, seventh and eighth optical axes; and a further set of optical apparatuses configured symmetrically with the first mentioned optical apparatus; the sixth optical axis to the ninth optical axis being associated to be rotatable in symmetrically synchronism with each other about the respective fifth optical axis.

34. (A binocular optical apparatus )
A expandable and tiltable binocular optical apparatus comprising a set of optical apparatuses each having a series of light paths successively formed via at least reflecting members, said light paths including at least seven optical axes from a first optical axis to the seventh optical axis constituting center axes thereof, the first optical axis constituting an incident optical axies of the whole optical apparatus, the second optical axis and the fourth optical axis being parallel with each other, one ends on the same side thereof being perpendicular to both ends of the third optical axis, as a result of which the second axis, the third axis and the fourth axis are arranged in the same plane in the form of 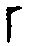 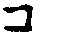 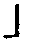 shape, one ends of the first axis and the fifth axis being perpendicular to the other ends of the second optical axis and the fourth optical axis, the first optical axis and the fifth optical axis extending in the opposite directions when all the axes from the first optical axis to the fifth optical axis are placed in the same plane, and the first optical axis and the fifth optical axis being associated to be rotatable in symmetrical synchronism with each other about the seond optical axis and the fourth optical axis, an erect optical apparatus being inserted between the first optical axis an the fifth optical axis, the fifth optical axis being formed into the sixth optical axis via the reflecting member, the sixth optical axis being formed into the seventh optical axies, the seventh optical axis being an exit optical axis of the whole optical apparatus, being parallel with the fifth optical axis and being supported to be rotatable about the fifth optical axis together with the sixth optical axis; an a further set of of optical apparatuses configured symmetrically with the first mentioned optical apparatus; the sixth optical axis to the seventh optical axis being associated to be rotatable in symmetrically synchronism with each other about the respective fifth optical axis.

35. A expandable and tiltable optical apparatus according to any of claims 17 to 32 wherein the symmetrical synchronous rotation of the first optical axis and the fifth optical axis is effected by at least a pair of gears meshed with each other, such rotation being effected about the second optical axis and the fourth optical axis.

36. A expandable and tiltable binocular optical apparatus according to any of claims 33 to 34 wherein the symmetrical synchronous rotation of the first optical axis and the fifth optical axis is effected by at least a pair of gears meshed with each other, such rotation being effected about the second optical axis and the fourth optical axis.

37. A expandable and tiltable optical apparatus according to any of claims 17 to 32 wherein the symmetrical synchronous rotation of the first optical axis and the fifth optical axis is effected by two worm wheels and worms interposed therebetween and meshed therewith, such rotation being effected about the second optical axis and the fourth optical axis.

38. A expandable and tiltable bincular optical apparatus according to any of claims 33 to 34 wherein the symmetrical synchronous rotation of the first optical axis and the fifth optical axis is effected by two worm wheels and worms interposed therebetween and meshed therewith, such rotation being effected about the second optical axis and the fourth optical axis.

39. A expandable and tiltable optical apparatus according to any of claims 17 to 32 wherein the symmetrical synchronous rotation of the first optical axis and the fifth optical axis is effected by two lens barrels and a wire-like or web-like part extended in the form of ∞ therebetween, such rotation being effected about the second optical axis and the fourth optical axis.

40. A expandable and tiltable binocular optical apparatus according to any of claims 33 to 34 wherein the symmetrical synchronous rotation of the first optical axis and the fifth optical axis is effected by two lens barrels and a wire-like or web-like part extended in the form of ∞ therebetween, such rotation being effected about the second optical axis and the fourth optical axis.

41. A expandable and tiltable optical apparatus according to any of claims 17 to 32 wherein the symmetrical synchronous rotation of the first optical axis and the fifth optical axis is effected by two synchronous motors, such rotation being effected about the second optical axis and the fourth optical axis.

42. A expandable and tiltable binocular optical apparatus according to any of claims 33 to 34 wherein the symmetrical synchronous rotation of the first optical axis and the fifth optical axis is effected by two synchronous motors, such rotation being effected about the second optical axis and the fourth optical axis.

43. A expandable and tiltable optical apparatus according to any of claims 17 to 32 comprising a click stop device for detachably fixing the relative positional relationship between the first optical axis and the fifth optical axis.

44. A expandable and tiltable binocular optical apparatus according to any of claims 33 to 34 comprising a click stop device for detachably fixing the relative positional relationship between the first optical axis and the fifth optical axis.

45. A expandable and tiltable optical apparatus according to any of claims 33 to 34 utilizing one of said pair of gears as a click stop device for detachably fixing therelative positional relationship between the first optical axis and the fifth optical axis.

46. A expandable and tiltable binocular optical apparatus according to any of claims 33 to 34 utilizing one of said pair of gears as a click stop device for detachably fixing the relative positional relationship between the first and the fifth optical axis.

47. A expandable and tiltable optical apparatus according to any of claims 17 to 32 comprising a balancer for gently keeping the relative positional relationship between the first optical axis and the fifth optical axis.

48. A expandable and tiltable binocular optical apparatus according to any of claims 33 to 34 comprising a balancer for gently keeping the relative positional relationship between the first optical axis and the fifth optical axis.

49. A expandable and tiltable optical apparatus according to any of claims 17 to 32 wherein the relative positional relationship between the first optical axis and the fifth optical axis is kept by an adjustable frictional force.

50. A expandable and tiltable binocular optical apparatus according to any of claims 33 to 34 wherein the relative positional relationship between the first optical axis and the fifth optical axis is kept by an adjustable frictional force.
